(19) Europäisches Patentamt

European Patent Office

Office européen des brevets

(11) **EP 2 085 787 B1**

(12) **FASCICULE DE BREVET EUROPEEN**

(45) Date de publication et mention
de la délivrance du brevet:
**25.05.2011 Bulletin 2011/21**

(51) Int Cl.:
***G01S 3/48*** *(2006.01)*

(21) Numéro de dépôt: **09352001.3**

(22) Date de dépôt: **30.01.2009**

(54) **Procédés et système pour la détermination d'angles de visée entre deux dispositifs**

Verfahren und System zur Bestimmung der Visierwinkel zwischen zwei Vorrichtungen

Methods and system for determining viewing angles between two devices

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **30.01.2008 FR 0850556**

(43) Date de publication de la demande:
**05.08.2009 Bulletin 2009/32**

(73) Titulaire: **Astrium SAS**
**75016 Paris (FR)**

(72) Inventeurs:
• **Voirin, Thomas**
**2312 JM Leiden (NL)**

• **Kervendal, Erwan**
**31000 Toulouse (FR)**
• **Sembély, Xavier**
**31400 Toulouse (FR)**

(74) Mandataire: **Fourcade, Emmanuelle**
**Schmit-Chrétien SNC**
**Parc de Basso Cambo**
**4 Rue Paul Mesplé**
**31100 Toulouse (FR)**

(56) Documents cités:
**WO-A-03/076962    WO-A-2007/013069
US-A- 5 652 590**

**Description**

La présente invention concerne la détermination d'angles de visée entre deux dispositifs. Plus particulièrement, la présente invention concerne la détermination d'angles de visée basée sur des mesures de phases angulaires de signaux radioélectriques émis par un premier dispositif et reçus par un second dispositif.

La ligne de visée d'un premier dispositif dit émetteur dans un référentiel lié à un second dispositif dit récepteur est par définition la direction dans ledit référentiel du dispositif récepteur d'un vecteur reliant le centre dudit référentiel du dispositif récepteur au centre d'un référentiel lié au dispositif émetteur.

La connaissance de la ligne de visée entre un premier véhicule portant le dispositif émetteur et un second véhicule portant le dispositif récepteur, est utilisée dans de nombreuses applications, en particulier dans les systèmes aérospatiaux.

Par exemple, la connaissance de la ligne de visée entre deux véhicules, associée à une connaissance d'une distance entre lesdits deux véhicules permet de déterminer la position relative du premier véhicule par rapport au second véhicule. La connaissance de la position relative est particulièrement utile dans le cas de véhicules spatiaux effectuant une mission de rendez-vous autonome en orbite (les véhicules se rapprochant l'un de l'autre jusqu'au contact), ou une mission de vol en formation (les véhicules devant se stabiliser précisément dans une position fixe l'un par rapport à l'autre). Dans ces deux exemples, la distance entre les deux véhicules est généralement comprise entre quelques mètres et quelques kilomètres.

Une autre application de la connaissance de la ligne de visée est la détermination d'attitude, qui peut être obtenue à partir de la connaissance des lignes de visées entre le dispositif récepteur dont on veut déterminer l'attitude, et au moins deux dispositifs émetteurs dont les positions relatives sont connues (tels que des satellites GPS) et tels que les lignes de visées correspondantes sont sensiblement différentes.

En pratique, dans ces applications, l'incertitude sur la ligne de visée entre les dispositifs émetteur et récepteur doit être la plus petite possible, de préférence comprise entre quelques dixièmes de degrés et quelques degrés. D'autre part, la détermination de la ligne de visée doit être réalisée de la façon la plus simple possible sans introduire de contraintes de conception trop importantes sur les dispositifs émetteur et récepteur.

Des procédés connus de détermination de la ligne de visée sont basés sur des mesures de phases angulaires de signaux radioélectriques émis par une antenne d'émission du dispositif émetteur et reçus par une base d'antennes de réception du dispositif récepteur, c'est-à-dire une paire d'antennes de réception $R_1$ et $R_2$, séparées d'une distance $L^{12}$ qui est généralement comprise entre quelques dizaines de centimètres et quelques mètres. Les signaux radioélectriques comportent au moins une composante périodique de longueur d'onde fixe et connue $\lambda_1$.

Les procédés connus basés sur des mesures de phases angulaires utilisent une mesure $\Delta \tilde{\varphi}_1^{12}$ d'une différence des phases angulaires des signaux radioélectriques reçus sur les deux antennes de réception, lesdites phases angulaires étant mesurées modulo $2\pi$. Une mesure $\Delta \bar{\phi}_1^{12}$ de différence de phase linéaire, homogène à une distance, est obtenue à partir de la mesure $\Delta \tilde{\varphi}_1^{12}$ de différence de phase angulaire en calculant :

$$\Delta \bar{\phi}_1^{12} = \frac{\Delta \tilde{\varphi}_1^{12} \, \lambda_1}{2\pi}.$$

Dans le cas où la distance entre les dispositifs émetteur et récepteur est grande devant la distance $L^{12}$, typiquement d'un facteur 10 ou plus, la différence de phase linéaire dépend essentiellement d'une différence de marche $d^{12}$ des signaux radioélectriques reçus sur les deux antennes de réception $R_1$ et $R_2$. La connaissance de ladite différence de marche permet de déterminer un angle de visée qui est l'angle entre la droite joignant les centres radioélectriques des deux antennes de réception et la droite joignant le centre radioélectrique d'une des deux antennes de réception au centre radioélectrique de l'antenne d'émission.

L'utilisation d'au moins trois antennes de réception non alignées, permet de déterminer au moins deux angles de visée qui définissent complètement la ligne de visée.

Une difficulté essentielle de ces procédés tient au fait que les phases angulaires sont mesurées modulo $2\pi$, c'est-à-dire qu'elles ne sont connues qu'à un nombre entier de fois $2\pi$ près, le nombre entier étant a priori inconnu. Pour déterminer la différence de marche $d^{12}$, l'ambiguïté sur la mesure $\Delta \bar{\phi}_1^{12}$ de différence de phase linéaire doit être levée en déterminant le nombre entier correspondant.

Pour lever l'ambiguïté sur la mesure $\Delta \bar{\phi}_1^{12}$ de différence de phase linéaire, il est connu d'un procédé, dit « null space » dans la littérature anglo-saxonne, de réaliser une exploration systématique de toutes les combinaisons de nombres entiers et de déterminer la combinaison la plus vraisemblable. La demande WO 2007/013069 propose en outre d'utiliser deux signaux radioélectriques de fréquences différentes pour réduire le nombre de combinaisons possibles. Ce procédé présente l'inconvénient d'être complexe et de nécessiter une grande puissance de calcul.

Il est également connu d'un procédé, dit « motion based », d'imprimer un mouvement de rotation connu au véhicule portant le dispositif récepteur, et d'utiliser ce mouvement pour lever l'ambiguïté. Dans ce cas, la mise en oeuvre du procédé impose des contraintes importantes sur les opérations du système, et introduit un délai pour effectuer le mouvement de rotation pendant lequel la ligne de visée peut changer.

Un procédé, dit « pseudo-distance » ou « pseudo-range », détermine directement la différence de marche à partir de mesures des temps de propagation entre l'antenne d'émission du dispositif émetteur et les antennes de réception du dispositif récepteur.

En déterminant directement la différence de marche sans utiliser la mesure $\Delta\bar{\phi}_1^{12}$ de différence de phase linéaire, il n'y a pas d'ambiguïté à lever. Cependant, l'estimée de la différence de marche ainsi obtenue est très bruitée car il est en pratique difficile d'obtenir des mesures de temps de propagation avec une bonne précision, notamment en présence de trajets multiples entre le dispositif émetteur et le dispositif récepteur.

La présente invention propose un procédé de détermination de la ligne de visée dont la précision correspond aux besoins actuels. Les calculs à effectuer sont peu nombreux et analytiques, et l'ambiguïté est levée dans le cas où les antennes de réception et des longueurs d'ondes des signaux radioélectriques émis par le dispositif émetteur vérifient certaines conditions, qui sont garanties par la mise en oeuvre d'un procédé de conception.

Selon l'invention, un procédé pour déterminer au moins un angle de visée entre un dispositif récepteur comportant au moins deux antennes de réception et au moins un dispositif émetteur comportant au moins une antenne d'émission de signaux radioélectriques sur au moins deux longueurs d'ondes différentes $\lambda_1$ et $\lambda_2$ aptes à être reçues par les au moins deux antennes de réception dudit dispositif récepteur, dans lequel au moins une différence de marche des signaux radioélectriques entre deux antennes de réception d'une base d'antennes est estimée pour déterminer l'au moins un angle de visée, comporte une étape de détermination pour chaque longueur d'onde $\lambda_p$ considérée, $p = 1$ et 2, d'une mesure $\Delta\tilde{\psi}_p^{12}$ de différence de phase $\Delta\psi_p^{12} = C_p\Delta\phi_p^{12}$ entre les deux antennes de réception, où $C_p$ désigne un nombre réel non nul connu a priori et $\Delta\phi_p^{12}$ désigne une différence de phase linéaire, homogène à une distance.

Le procédé selon l'invention est caractérisé en ce qu'il comporte les étapes suivantes :

- détermination d'une différence de phase virtuelle $\Delta\tilde{\psi}_{WL}^{12}$ entre les deux antennes de réception par combinaison linéaire des mesures $\Delta\tilde{\psi}_p^{12}$ de différences de phase déterminées pour chaque longueur d'onde $\lambda_p$, s'exprimant sous la forme :

$$\Delta\tilde{\psi}_{WL}^{12} = D\left(\frac{P}{C_1\lambda_1}\Delta\tilde{\psi}_1^{12} - \frac{Q}{C_2\lambda_2}\Delta\tilde{\psi}_2^{12}\right),$$

où D désigne un nombre réel non nul connu a priori, $P$ et $Q$ sont des nombres entiers non nuls tels que $P\lambda_2 \neq Q\lambda_1$,

- détermination d'une valeur $\Delta\widehat{N}_{WL}^{12}$ entière d'une ambiguïté de la différence de phase virtuelle $\Delta\tilde{\psi}_{WL}^{12}$, égale à :

$$\Delta\widehat{N}_{WL}^{12} = R\left(-\Delta\tilde{\psi}_{WL}^{12}/D\right),$$

où $R(x)$ désigne le nombre entier le plus proche de x,

- détermination d'une première estimation $\hat{d}_{WL}^{12}$ de l'au moins une différence de marche des signaux radioélectriques entre les deux antennes de réception, égale à :

$$\hat{d}_{WL}^{12} = \frac{\lambda_{WL}^{12}}{D}\left(\Delta\tilde{\psi}_{WL}^{12} + D\Delta\widehat{N}_{WL}^{12}\right),$$

où $\lambda_{WL}^{12}$ est une longueur d'onde virtuelle égale à $\lambda_1\lambda_2/(P\lambda_2 - Q\lambda_1)$.

Pour améliorer la précision de l'estimation de l'au moins une différence de marche, le procédé comporte également les étapes suivantes :

- détermination d'au moins une valeur $\Delta\widehat{N}_p^{12}$ entière d'une ambiguïté de la mesure $\Delta\tilde{\psi}_p^{12}$ de différence de phase d'une longueur d'onde $\lambda_p$, $p$ = 1 et/ou 2, comme étant égale à :

$$\Delta\widehat{N}_p^{12} = R\left(\frac{-\Delta\tilde{\psi}_p^{12}+C_p\hat{d}_{WL}^{12}}{\lambda_p C_p}\right),$$

- détermination d'au moins une seconde estimation $\hat{d}_p^{12}$, $p$ = 1 et/ou 2, de l'au moins une différence de marche des signaux radioélectriques entre les deux antennes de réception, comme étant égale à :

$$\hat{d}_p^{12} = \frac{(\Delta\tilde{\psi}_p^{12}+\lambda_p C_p \Delta\widehat{N}_p^{12})}{C_p}.$$

Avantageusement, une estimation de l'au moins une différence de marche est calculée par moindres carrés à partir d'au moins deux estimations de ladite au moins une différence de marche parmi les estimations $\hat{d}_{WL}^{12}$, $\hat{d}_1^{12}$ et $\hat{d}_2^{12}$ et d'une estimation d'un niveau d'erreurs présentes dans lesdites estimations.

Si une seule estimation $\hat{d}_p^{12}$ doit être calculée, un niveau d'erreurs présentes dans la mesure $\Delta\tilde{\psi}_p^{12}$ de différence de phase est estimé pour chaque longueur d'onde $\lambda_p$, $p$ = 1 et 2, et une seule estimation $\hat{d}_p^{12}$ de l'au moins une différence de marche est calculée à partir de la mesure $\Delta\tilde{\psi}_p^{12}$, = 1 ou 2, de différence de phase pour laquelle le niveau d'erreurs estimé est le plus petit.

Afin de réduire le niveau d'un bruit de mesure, des valeurs estimées successives de l'au moins une différence de marche, obtenues à partir d'une succession de mesures de différences de phases, sont filtrées.

Pour réduire initialement des erreurs de mesure, une estimation $\Delta\hat{\beta}_p^{12}$ d'un biais différentiel de mesure $\Delta\beta_p^{12}$ sur la mesure $\Delta\tilde{\psi}_p^{12}$ de différence de phase, égal à $C_p\Delta b_p^{12}$ où $\Delta b_p^{12}$ désigne un biais différentiel de mesure de phase linéaire, est préalablement établie par théorie ou simulation ou expérimentation pour au moins une longueur d'onde $\lambda_p$, $p$ = 1 et/ou 2, et les étapes dudit procédé sont appliquées en remplaçant au moins une mesure $\Delta\tilde{\psi}_p^{12}$ de différence de phase par une mesure de différence de phase après correction $\Delta\tilde{\psi}_p^{12} - \Delta\hat{\beta}_p^{12}$, $p$ = 1 et/ou 2.

Pour améliorer la performances du procédé, une estimation $\Delta\hat{\beta}_p^{12}$ d'un biais différentiel de mesure $\Delta\beta_p^{12} = C_p\Delta b_p^{12}$ sur la mesure $\Delta\tilde{\psi}_p^{12}$ de différence de phase est déterminée pour au moins une longueur d'onde $\lambda_p$, $p$ = 1 et/ou 2, au moins à partir de réponses de phase angulaire des deux antennes de réception préalablement déterminées par théorie ou simulation ou expérimentation, et d'au moins une valeur d'un angle de visée déterminée à partir d'une estimation de l'au moins une différence de marche obtenue par le procédé, et les étapes dudit procédé sont appliquées en remplaçant au moins une mesure $\Delta\tilde{\psi}_p^{12}$ de différence de phase par une mesure de différence de phase après correction $\Delta\tilde{\psi}_p^{12} - \Delta\hat{\beta}_p^{12}$, $p$ = 1 et/ou 2.

Dans ce cas et pour réduire des erreurs de mesure de manière itérative, le procédé est avantageusement itéré au moins deux fois, des estimations $\Delta\hat{\beta}_p^{12}$, $p$ = 1 et/ou 2, étant calculées pour chaque itération du procédé et les étapes dudit procédé étant appliquées en remplaçant au moins une mesure $\Delta\tilde{\psi}_p^{12}$ de différence de phase par une mesure de différence de phase après correction $\Delta\tilde{\psi}_p^{12} - \Delta\hat{\beta}_p^{12}$, $p$ = 1 et/ou 2.

Dans les modes de mise en oeuvre dans lesquels des différences de phase après correction sont utilisées, celles-ci sont calculées soit avant de déterminer la première estimation $\hat{d}_{WL}^{12}$, en considérant de préférence deux différences de phase après correction $\Delta\tilde{\psi}_p^{12} - \Delta\hat{\beta}_p^{12}$, $p$ = 1 et 2, soit après le calcul de la première estimation $\hat{d}_{WL}^{12}$ pour déterminer au moins une seconde estimation $\hat{d}_p^{12}$, $p$ = 1 et/ou 2.

De préférence les nombres entiers non nuls $P$ et $Q$ sont choisis de sorte que le nombre rationnel $P/Q$ soit proche du rapport des longueurs d'ondes $\lambda_1/\lambda_2$.

L'invention concerne également un procédé pour déterminer les caractéristiques essentielles d'un système de détermination d'au moins un angle de visée par le procédé précédent. Le procédé est caractérisé en ce que les caractéristiques essentielles sont au moins une valeur d'une distance $L^{12}$ entre les deux antennes de réception de la base d'antennes considérée pour estimer l'au moins une différence de marche, des valeurs des deux longueurs d'ondes $\lambda_1$, $\lambda_2$, et des valeurs du couple d'entiers $P$ et $Q$ non nuls, définissant trois groupes de caractéristiques essentielles.

Le procédé consiste à déterminer un ensemble de valeurs pour lesdites caractéristiques essentielles qui réponde à la condition suivante :

$$L^{12} < \frac{\lambda_1\lambda_2}{2|P\lambda_2 - Q\lambda_1|}.$$

Afin de tenir compte d'erreurs de mesure sur les signaux radioélectriques, des estimations $max|\Delta\hat{e}_p^{12}|$ de bornes supérieures de valeurs absolues d'erreurs différentielles de mesure de phase linéaire entre les deux antennes de réception de la base d'antennes, homogènes à des distances, sont déterminées pour chaque longueur d'onde $\lambda_p$, $p$ = 1 et 2, par théorie ou simulation ou expérimentation, une borne supérieure maximale $max|\Delta\hat{e}^{12}|$ est définie égale à la plus grande des estimations $max|\Delta\hat{e}_p^{12}|$, et le procédé est tel que les caractéristiques essentielles sont déterminées pour répondre à au moins une des conditions suivantes :

$$L^{12} < \frac{\lambda_1\lambda_2}{|P\lambda_2 - Q\lambda_1|}\left(\frac{1}{2} - \frac{|P|}{\lambda_1}max|\Delta\hat{e}_1^{12}| - \frac{|Q|}{\lambda_2}max|\Delta\hat{e}_2^{12}|\right),$$

$$L^{12} < \frac{\lambda_1\lambda_2}{2|P\lambda_2 - Q\lambda_1|} - \frac{(|P|\lambda_2 + |Q|\lambda_1)}{|P\lambda_2 - Q\lambda_1|}max|\Delta\hat{e}^{12}|.$$

De préférence, les caractéristiques essentielles sont également choisies de sorte que l'une au moins des conditions suivantes est satisfaite :

$$max|\Delta\hat{e}_1^{12}| + max|\Delta\hat{e}_2^{12}| < \frac{|P\lambda_2 - Q\lambda_1|}{2|P|},$$

$$max|\Delta\hat{e}_1^{12}| + max|\Delta\hat{e}_2^{12}| < \frac{|P\lambda_2 - Q\lambda_1|}{2|Q|},$$

$$max|\Delta\hat{e}^{12}| < \frac{|P\lambda_2 - Q\lambda_1|}{4\cdot max(|P|,|Q|)}.$$

Par exemple, les estimations $max\left|\Delta\hat{e}_p^{12}\right|$ sont déterminées à partir de réponses de phase angulaire des deux antennes de réception de la base d'antennes et/ou à partir d'estimations d'écarts types de bruits de mesure.

Dans un mode de mise en oeuvre du procédé, les caractéristiques essentielles correspondant à deux groupes de caractéristiques essentielles sont d'abord déterminées, puis les caractéristiques essentielles correspondant au dernier groupe sont déterminées.

Dans un autre mode de mise en oeuvre du procédé, les caractéristiques essentielles correspondant à un groupe de caractéristiques essentielles sont d'abord déterminées, puis les caractéristiques essentielles correspondant aux deux derniers groupes sont déterminées.

Dans ces deux derniers modes de mise en oeuvre du procédé, une des deux longueurs d'ondes peut être préalablement contrainte à être égale à une valeur donnée, comme par exemple une longueur d'onde utilisée par un système global de navigation par satellites.

L'invention concerne également le dispositif récepteur qui détermine au moins un angle de visée par le procédé de détermination de l'invention.

Le dispositif récepteur est tel qu'au moins une des conditions suivantes est satisfaite pour ladite base d'antennes :

$$L^{12} < \frac{\lambda_1\lambda_2}{2|P\lambda_2 - Q\lambda_1|},$$

$$L^{12} < \frac{\lambda_1\lambda_2}{|P\lambda_2 - Q\lambda_1|}\left(\frac{1}{2} - \frac{|P|}{\lambda_1}max|\Delta\hat{e}_1^{12}| - \frac{|Q|}{\lambda_2}max|\Delta\hat{e}_2^{12}|\right),$$

$$L^{12} < \frac{\lambda_1\lambda_2}{2|P\lambda_2 - Q\lambda_1|} - \frac{(|P|\lambda_2 + |Q|\lambda_1)}{|P\lambda_2 - Q\lambda_1|}max|\Delta\hat{e}^{12}|.$$

Avantageusement, le dispositif récepteur est également tel qu'au moins une des conditions suivantes est satisfaite :

$$max|\Delta\hat{e}_1^{12}| + max|\Delta\hat{e}_2^{12}| < \frac{|P\lambda_2 - Q\lambda_1|}{2|P|},$$

$$max|\Delta\hat{e}_1^{12}| + max|\Delta\hat{e}_2^{12}| < \frac{|P\lambda_2 - Q\lambda_1|}{2|Q|},$$

$$max|\Delta\hat{e}^{12}| < \frac{|P\lambda_2 - Q\lambda_1|}{4\cdot max(|P|,|Q|)}.$$

Dans le cas d'un dispositif récepteur comportant au moins trois antennes de réception, celles-ci sont de préférence non alignées, des estimations de différences de marche sont calculées pour au moins deux bases d'antennes et les conditions décrites précédemment sont satisfaites pour lesdites au moins deux bases d'antennes.

Dans un tel cas, soit un angle de visée est déterminé pour chaque estimation de différence de marche, dans un plan de l'espace défini par la base d'antennes correspondante et le dispositif émetteur, et les au moins deux angles de visée sont convertis en un angle d'azimut et en un angle d'élévation dans un référentiel lié au dispositif récepteur ; soit lesdits angles d'azimut et d'élévation sont déterminés directement à partir des estimations de différences de marche.

Avantageusement les antennes de réception sont agencées pour présenter dans une direction donnée des réponses de phase angulaire sensiblement identiques afin de minimiser des biais différentiels de mesure de phase.

Selon l'invention, un système de détermination d'au moins un angle de visée comporte un dispositif récepteur selon l'invention, et comporte au moins un dispositif émetteur comportant au moins une antenne d'émission de signaux radioélectriques sur au moins les deux longueurs d'ondes $\lambda_1$ et $\lambda_2$.

De préférence, les signaux radioélectriques émis par l'au moins un dispositif émetteur sont compatibles avec des signaux radioélectriques émis par un système global de navigation par satellites, et un dispositif émetteur comporte un pseudolite.

Pour déterminer une orientation de la base d'antennes de réception du dispositif récepteur dans un référentiel de référence, le système de détermination comporte au moins deux dispositifs émetteurs dont les angles de visées par rapport au dispositif récepteur sont sensiblement différents, et détermine ladite orientation en utilisant d'une part des estimations des angles de visée des au moins deux dispositifs émetteurs et d'autre part des positions relatives du dispositif récepteur par rapport aux au moins deux dispositifs émetteurs connues a priori dans le référentiel de référence.

Dans un mode préféré de réalisation du système de détermination, au moins deux dispositifs émetteurs sont embarqués dans des satellites d'un système global de navigation par satellites et le dispositif récepteur est embarqué dans un véhicule comportant au moins un récepteur du système global de navigation par satellites.

Avantageusement, les positions relatives du dispositif récepteur par rapport aux au moins deux dispositifs émetteurs sont obtenues de l'au moins un récepteur du système global de navigation par satellites.

Pour déterminer l'attitude du dispositif récepteur par rapport au référentiel de référence, le dispositif récepteur comporte au moins trois antennes de réception non alignées.

La description suivante de modes de réalisation de l'invention est faite en se référant aux figures qui représentent de manière non limitative :

- Figure 1, une représentation schématique dans l'espace d'un système de détermination d'angles de visée entre deux dispositifs, illustrant les définitions utilisées dans la description,
- Figure 2, une représentation schématique illustrant le problème de détermination d'un angle de visée dans un plan,
- Figure 3, les étapes du procédé de détermination d'angles de visée selon l'invention,
- Figure 4, les étapes du procédé de conception de système de détermination d'angles de visée selon un mode de mise en oeuvre.

La présente invention concerne un procédé de détermination 6 pour déterminer au moins un angle de visée, un procédé de conception 7 pour déterminer des caractéristiques essentielles d'un système de détermination 1 d'angles de visée, un dispositif récepteur 3 pour la mise en oeuvre dudit procédé de détermination, et également le système de détermination 1 d'angles de visée correspondant.

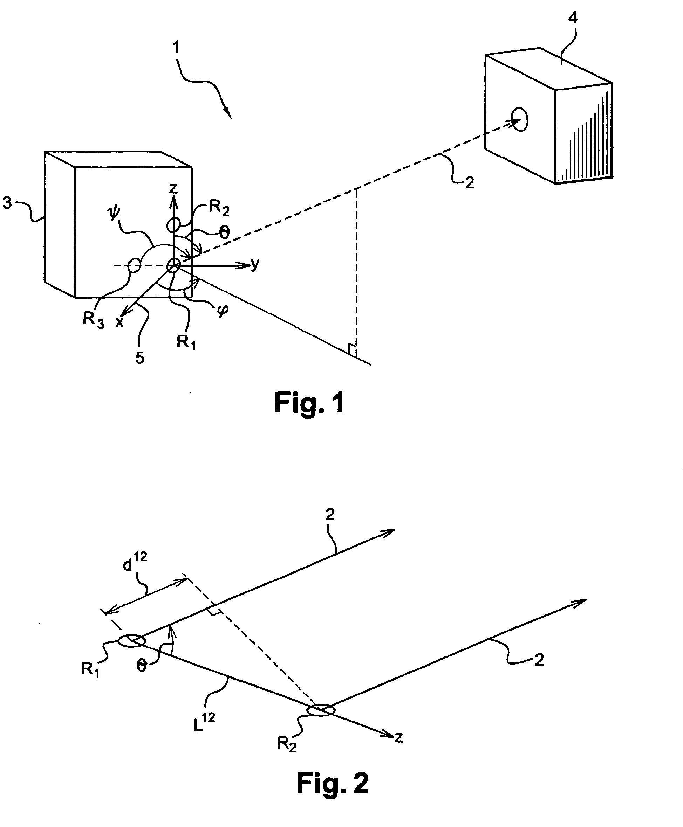

La présente invention s'applique à tout système de détermination 1 d'angles de visée, représenté sur la figure 1, basé sur des mesures de phases angulaires de signaux radioélectriques, émis par un dispositif émetteur 4 et reçus par le dispositif récepteur 3 comportant au moins deux antennes de réception.

Les dispositifs récepteur 3 et émetteur 4 sont embarqués dans des véhicules, qui sont de manière non limitative des véhicules spatiaux et/ou terrestres, des satellites ou des aéronefs.

Une ligne de visée 2 est déterminée essentiellement par deux angles de visée, qui définissent la direction dans l'espace du dispositif émetteur 4 par rapport à un référentiel 5 du dispositif récepteur 3. Les deux angles de visée sont définis dans deux plans non parallèles, de préférence orthogonaux. Par exemple la ligne de visée est entièrement déterminée par les angles d'azimut $\varphi$ et d'élévation $\theta$, qui sont des angles de visée définis dans le référentiel 5 lié au dispositif récepteur.

Dans la suite de l'exposé, on suppose qu'une différence entre les lignes de visée de deux antennes de réception du dispositif récepteur 3 est négligeable, c'est-à-dire que la ligne de visée 2 est sensiblement la même pour toutes les antennes de réception dudit dispositif récepteur. C'est le cas par exemple si une erreur d'angle tolérée sur les angles de visée définissant la ligne de visée est grande par rapport à la différence d'angles desdits angles de visée, ce qui est le cas notamment si les dimensions d'une base d'antennes, c'est-à-dire d'une paire d'antennes de réception, sont petites par rapport à la distance entre lesdits dispositifs.

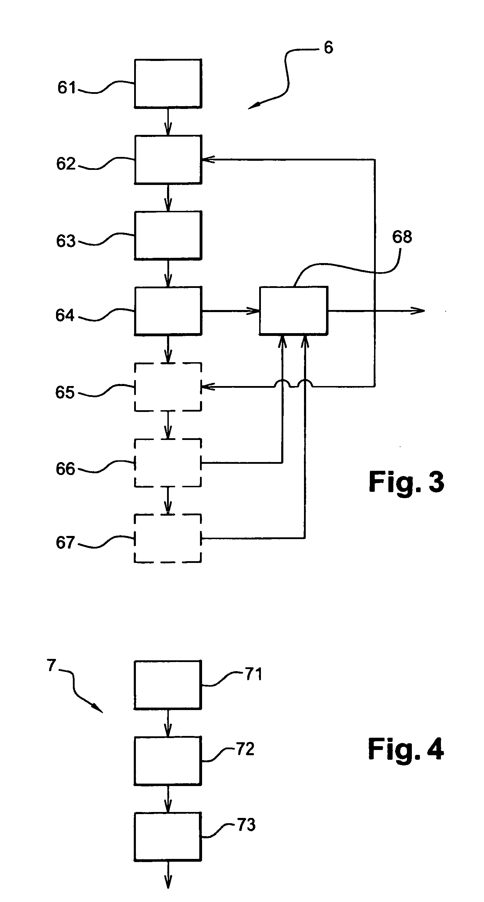

Le procédé de détermination 6 d'angles de visée suivant l'invention, représenté sur la figure 3, comporte une pluralité d'étapes exécutées de préférence par le dispositif récepteur 3 pour des raisons de précision liée à la rapidité d'exécution des étapes.

Le procédé de détermination 6 est appliqué dans un système de détermination 1 d'angles de visée dans lequel le dispositif émetteur 4 comporte au moins une antenne d'émission, et le dispositif récepteur 3 comporte $N_R$ antennes de réception $R_1$ à $R_{NR}$, $N_R$ étant supérieur ou égal à deux.

Le dispositif émetteur 4 émet des signaux radioélectriques comportant $N_L$ composantes périodiques distinctes, $N_L$ étant supérieur ou égal à deux, qui correspondent à $N_L$ longueurs d'ondes différentes $\lambda_n$, $1 \le n \le N_L$. Les signaux radioélectriques correspondant à des longueurs d'ondes différentes sont émis séquentiellement ou simultanément.

Le procédé de détermination 6 autorise la détermination, au signe près, d'un angle de visée par base d'antennes de réception, c'est-à-dire par paire d'antennes de réception. L'angle de visée déterminé pour la base d'antennes considérée est l'angle entre la droite joignant les centres radioélectriques des deux antennes de réception de la base d'antennes et la droite joignant le centre radioélectrique d'une des deux antennes de réception au centre radioélectrique de l'antenne d'émission.

L'ambiguïté sur le signe de l'angle de visée à déterminer est levée en pratique du fait qu'une base d'antennes embarquée dans un véhicule n'assure qu'un champ de vision de l'ordre de $2\pi$ stéradians : la détection au niveau d'une base d'antennes d'une puissance de signaux radioélectriques supérieure à un seuil préalablement établi permet donc de supposer que le dispositif émetteur 4 se trouve dans le champ de vision de la base d'antennes considérée, et de lever ladite ambiguïté de signe. Un champ de vision de $4\pi$ stéradians est obtenu en pratique en plaçant des bases d'antennes de part et d'autre dudit véhicule. De ce fait, on suppose dans la suite de l'exposé que l'ambiguïté sur le signe de l'angle de visée est levée.

Pour déterminer deux angles de visée qui définissent la ligne de visée, le procédé de détermination 6 nécessite, pour le dispositif récepteur 3, au moins deux bases d'antennes non parallèles, c'est-à-dire un nombre $N_R$ d'antennes de réception au moins égal à trois, les au moins trois antennes de réception n'étant pas alignées, de sorte à définir avec l'antenne d'émission au moins deux plans non parallèles. Les deux angles de visée déterminés sont par exemple pour la figure 1 :

- l'angle de visée $\theta$ pour la base d'antennes $(R_1, R_2)$ et un angle de visée $\psi$ pour la base d'antennes $(R_1, R_3)$, à partir desquels les angles d'élévation et d'azimut peuvent être déterminés,

- les angles d'élévation et d'azimut qui sont déterminés directement.

Dans un premier temps, afin de présenter les principes de l'invention, le procédé de détermination 6 est décrit dans le cas de la détermination d'un angle de visée pour une base d'antennes, c'est-à-dire dans le cas d'un problème à deux dimensions tel que représenté sur la figure 2. En outre la description est faite pour un système de détermination 1 comportant deux longueurs d'ondes $\lambda_1$ et $\lambda_2$ et deux antennes de réception $R_1$ et $R_2$.

Dans une première étape 61 du procédé de détermination 6, des mesures $\Delta\tilde{\phi}_n^{12}$ de différences de phase linéaire $\Delta\phi_n^{12}$, homogènes à des distances, entre les deux antennes de réception $R_1$ et $R_2$, sont déterminées pour chaque longueur d'onde $\lambda_n$ ($1 \le n \le 2$).

Les mesures $\Delta\tilde{\phi}_n^{12}$ de différences de phase linéaire $\Delta\phi_n^{12}$, sont par exemple obtenues à partir de mesures $\Delta\tilde{\varphi}_n^{12}$ de différences de phase angulaire $\Delta\varphi_n^{12}$, où $\Delta\varphi_n^{12} = \varphi_n^1 - \varphi_n^2$, $\varphi_n^1$ et $\varphi_n^2$ étant les phases angulaires des signaux radioélectriques reçus sur les antennes de réception $R_1$ et $R_2$, en appliquant la relation :

$$\Delta\tilde{\phi}_n^{12} = \frac{\Delta\tilde{\varphi}_n^{12}\lambda_n}{2\pi}.$$

Dans un autre mode de mise en oeuvre, des mesures $\tilde{\phi}_n^m$ des phases linéaires $\phi_n^m$, telles que $\Delta\tilde{\phi}_n^{12} = \tilde{\phi}_n^1 - \tilde{\phi}_n^2$, sont obtenues à partir de mesures $\tilde{\varphi}_n^m$ ($1 \le m \le 2$) des phases angulaires, en appliquant la relation $\tilde{\phi}_n^m = \tilde{\varphi}_n^m\lambda_n/2\pi$.

Les signaux de phase angulaire sont définis à $2\pi$ près, et sont généralement exprimés par convention dans l'intervalle $]-\pi,\pi]$. Cependant, les étapes du procédé de détermination 6 ne dépendent pas de l'intervalle choisi pour mesurer lesdits signaux de phase angulaire.

Les mesures $\tilde{\phi}_n^m$ des phases linéaires $\phi_n^m$ s'expriment sous la forme d'une somme de termes homogènes à des distances :

$$\tilde{\phi}_n^m = \phi_n^m + e_n^m = d^m - \lambda_n N_n^m + \phi_n + e_n^m \quad (1)$$

Dans cette expression :

- $d^m$ est une distance entre l'antenne du dispositif émetteur 4 et l'antenne de réception $R_m$ du dispositif récepteur 3,

- $e_n^m$ est une erreur de mesure de phase linéaire qui est généralement décomposée en un bruit de mesure de phase linéaire $\varepsilon_n^m$ et un biais de mesure de phase linéaire $b_n^m$ qui est introduit entre autres par la réponse de phase de ladite antenne de réception $R_m$ pour la longueur d'onde $\lambda_n$ et/ou par des trajets multiples entre le dispositif émetteur

et l'antenne $R_m$,

- $\phi_n$ correspond à une phase linéaire initiale au niveau de l'antenne d'émission du dispositif émetteur 4,

- $N_n^m$ est un nombre entier représentant le nombre de longueurs d'ondes entières parcourues par le signal radioélectrique de longueur d'onde $\lambda_n$ entre le dispositif émetteur 4 et l'antenne de réception $R_m$ du dispositif récepteur 3.

De (1) on déduit l'expression des deux mesures $\Delta\tilde{\phi}_n^{12}$ de différences de phase linéaire :

$$\Delta\tilde{\phi}_n^{12} = d^{12} - \lambda_n \Delta N_n^{12} + \Delta e_n^{12} \quad (2)$$

où :

- $d^{12}$ est égal à $d^1 - d^2$ et correspond à une différence de marche des signaux radioélectriques, émis par le dispositif émetteur 4, et reçus par les antennes de réception $R_1$ et $R_2$ du dispositif récepteur 3,

- $\Delta e_n^{12}$ est égal à $e_n^1 - e_n^2$ et correspond à une erreur différentielle de mesure de phase linéaire pour la longueur d'onde $\lambda_n$ entre lesdites antennes $R_1$ et $R_2$, qui est décomposée en un biais différentiel de mesure de phase linéaire $\Delta b_n^{12}$ égal à $b_n^1 - b_n^2$ et un bruit différentiel de mesure de phase linéaire $\Delta\varepsilon_n^{12}$ égal à $\varepsilon_n^1 - \varepsilon_n^2$,

- $\Delta N_n^{12}$ est un nombre entier égal à $N_n^1 - N_n^2$.

En considérant (2) on voit que la mesure $\Delta\tilde{\phi}_n^{12}$ de différence de phase linéaire, est égale, à l'erreur différentielle de mesure $\Delta e_n^{12}$ près, à la différence entre la différence de marche $d^{12}$ et le nombre entier $\Delta N_n^{12}$ multiplié par la longueur d'onde $\lambda_n$. Le nombre entier $\Delta N_n^{12}$ correspond donc à l'ambiguïté restante sur la mesure $\Delta\tilde{\phi}_n^{12}$ de différence de phase linéaire, qui doit être levée.

Dans un mode particulier de mise en oeuvre du procédé de détermination 6, des mesures successives de différences de phase, linéaire ou angulaire, sont filtrées pour réduire les bruits différentiels de mesure. Avantageusement, les mesures successives sont obtenues sur une fenêtre de temps pendant laquelle les variations de l'angle de visée sont négligeables.

Dans un autre mode particulier de mise en oeuvre du procédé de détermination 6, une correction des biais différentiels de mesure de phase linéaire $\Delta b_n^{12}$ est réalisée sur les mesures $\Delta\tilde{\phi}_n^{12}$ de différences de phase linéaire.

Les biais différentiels de mesure $\Delta b_n^{12}$ sont décomposés essentiellement en deux parties :

- une partie qui ne dépend pas de l'angle de visée recherché (biais introduit par les étages radioélectriques des antennes de réception, des différences de fréquences d'échantillonnage des signaux radioélectriques, etc.),
- une partie qui dépend de l'angle de visée recherché (réponses de phase angulaire des antennes de réception $R_1$ et $R_2$, trajets multiples entre le dispositif émetteur 4 et lesdites antennes de réception, etc.).

Dans ce mode, des estimations $\Delta\hat{b}_n^{12}$ des biais différentiels de mesure de phase linéaire $\Delta b_n^{12}$ sont obtenues au préalable pour au moins une desdites deux parties, par théorie, simulation ou expérimentation. Par exemple, des estimations $\Delta\hat{b}_n^{12}$ sont obtenues pour la partie qui dépend de l'angle de visée recherché à partir des réponses de phase angulaire des antennes de réception, qui sont connues a priori par calibration, et d'une valeur approximative de l'angle de visée recherché, obtenue par d'autres moyens.

Dans ce mode de mise en oeuvre, les étapes ultérieures du procédé sont appliquées en remplaçant les mesures $\Delta\tilde{\phi}_n^{12}$ de différences de phase linéaire par des mesures de différences de phase linéaire après correction $\Delta\tilde{\phi}_n^{12} - \Delta\hat{b}_n^{12}$.

Dans une seconde étape 62 du procédé de détermination 6, les mesures $\Delta\tilde{\phi}_1^{12}$ et $\Delta\tilde{\phi}_2^{12}$ de différences de phase linéaire de la base d'antennes pour les deux longueurs d'onde $\lambda_1$ et $\lambda_2$ sont combinées linéairement pour obtenir une différence de phase virtuelle $\Delta\tilde{\phi}_{WL}^{12}$, également dite différence de phase « Wide Lane » (d'où la notation indicielle WL).

La seconde étape 62 consiste à calculer la différence de phase virtuelle $\Delta\tilde{\phi}_{WL}^{12}$ :

$$\Delta\tilde{\phi}_{WL}^{12} = A\Delta\tilde{\phi}_1^{12} - B\Delta\tilde{\phi}_2^{12} \quad (3)$$

$A$ et $B$ sont des nombres réels non nuls, qui sont égaux respectivement à $P\lambda_2/(P\lambda_2 - Q\lambda_1)$ et à $Q\lambda_1/(P\lambda_2 - Q\lambda_1)$, où $P$ et $Q$ sont des nombres entiers non nuls, qui sont des paramètres du procédé de détermination 6, et qui sont tels que $P\lambda_2 \neq Q\lambda_1$. Par exemple, $P$ et $Q$ sont égaux à 1. De préférence, $P$ et $Q$ sont choisis de sorte que $P\lambda_2 - Q\lambda_1$ est petit en valeur absolue pour avoir des nombres réels $A$ et $B$ grands en valeur absolue, c'est-à-dire de sorte que le nombre rationnel $P/Q$ soit proche du rapport des longueurs d'ondes $\lambda_1/\lambda_2$.
Les nombres réels $A$ et $B$ sont de préférence positifs, mais dans la suite de l'exposé le cas général est décrit.
Considérant (2) et (3) on déduit l'expression de la différence de phase virtuelle $\Delta\tilde{\phi}_{WL}^{12}$ :

$$\Delta\tilde{\phi}_{WL}^{12} = d^{12} - \lambda_{WL}^{12}\Delta N_{WL}^{12} + \Delta e_{WL}^{12} \quad (4)$$

Dans l'expression précédente :

- $\lambda_{WL}^{12}$ est une longueur d'onde virtuelle, qui est égale à $\lambda_1\lambda_2/(P\lambda_2 - Q\lambda_1)$,

- $\Delta e_{WL}^{12}$ est une erreur différentielle de mesure de phase linéaire égale à $A\Delta e_1^{12} - B\Delta e_2^{12}$,

- $\Delta N_{WL}^{12}$ est un nombre entier égal à $P\Delta N_1^{12} - Q\Delta N_2^{12}$ et correspond à une ambiguïté de la différence de phase virtuelle $\Delta\tilde{\phi}_{WL}^{12}$.

Dans une troisième étape 63 du procédé de détermination 6, une valeur $\Delta\widehat{N}_{WL}^{12}$ de l'ambiguïté de la différence de phase virtuelle $\Delta\tilde{\phi}_{WL}^{12}$ est obtenue en arrondissant $-\Delta\tilde{\phi}_{WL}^{12}/\lambda_{WL}^{12}$ au nombre entier le plus proche, qui est soit supérieur soit égal soit inférieur.
La fonction d'arrondi à la valeur entière la plus proche est notée $R(x)$ dans la suite de l'exposé.

Suivant l'expression (4), la valeur $\Delta\widehat{N}_{WL}^{12}$ est donc égale à :

$$\Delta\widehat{N}_{WL}^{12} = R\left(-\frac{\Delta\tilde{\phi}_{WL}^{12}}{\lambda_{WL}^{12}}\right) = \Delta N_{WL}^{12} - R\left(\frac{1}{\lambda_{WL}^{12}}(d^{12} + \Delta e_{WL}^{12})\right).$$

La fonction d'arrondi est telle que $R(x) = 0$ si $|x| < 1/2$. De ce fait, la valeur $\Delta\widehat{N}_{WL}^{12}$ est égale strictement à l'ambiguïté $\Delta N_{WL}^{12}$ de la différence de phase virtuelle $\Delta\tilde{\phi}_{WL}^{12}$ si la condition suivante est satisfaite :

$$|d^{12} + A\Delta e_1^{12} - B\Delta e_2^{12}| < |\lambda_{WL}^{12}|/2 \quad (5)$$

On considère des bornes supérieures $max|\Delta e_1^{12}|$ et $max|\Delta e_2^{12}|$ des valeurs absolues des erreurs différentielles de mesure de phase linéaire respectivement $\Delta e_1^{12}$ et $\Delta e_2^{12}$. Si lesdites valeurs absolues des erreurs différentielles de mesure ne sont pas bornées, $max|\Delta e_1^{12}|$ et $max|\Delta e_2^{12}|$ sont par exemple telles qu'elles majorent les valeurs absolues des erreurs différentielles de mesure dans une majorité des cas.

D'autre part on note que la valeur absolue de la différence de marche $d^{12}$ ne peut physiquement pas être supérieure à une distance entre les centres radioélectriques des antennes de réception $R_1$ et $R_2$, dite distance caractéristique $L^{12}$ valeur qui est obtenue lorsque le dispositif émetteur 4 est dans la direction définie par les centres radioélectriques des deux antennes de réception.

De ce fait, suivant l'expression (5), en majorant les erreurs différentielles de mesure de phase linéaire $\Delta e_1^{12}$ et $\Delta e_2^{12}$ par les bornes supérieures $max|\Delta e_1^{12}|$ et $max|\Delta e_2^{12}|$, et la valeur absolue de la différence de marche $d^{12}$ par la distance $L^{12}$, on déduit que la valeur $\Delta \widehat{N}_{WL}^{12}$ est égale à $\Delta N_{WL}^{12}$ si le dispositif récepteur 3 et les signaux radioélectriques satisfont la condition suivante :

$$L^{12} < \frac{\lambda_1 \lambda_2}{|P\lambda_2 - Q\lambda_1|}\left(\frac{1}{2} - \frac{|P|}{\lambda_1}max|\Delta e_1^{12}| - \frac{|Q|}{\lambda_2}max|\Delta e_2^{12}|\right) \quad (6)$$

La condition (6) est obtenue par des choix de caractéristiques essentielles du système de détermination 1.

Dans le cas où les erreurs différentielles de mesure de phase linéaire et les bornes supérieures sont négligeables, la condition (6) devient :

$$L^{12} < \frac{\lambda_1 \lambda_2}{2|P\lambda_2 - Q\lambda_1|} = \frac{|\lambda_{WL}^{12}|}{2} \quad (7)$$

Une première estimation $\hat{d}_{WL}^{12}$ de la différence de marche $d^{12}$ est obtenue au cours d'une quatrième étape 64 du procédé de détermination 6, en reportant la valeur $\Delta \widehat{N}_{WL}^{12}$ dans l'expression (4) de la différence de phase virtuelle $\Delta \tilde{\phi}_{WL}^{12}$ :

$$\hat{d}_{WL}^{12} = \Delta \tilde{\phi}_{WL}^{12} + \lambda_{WL}^{12}\Delta \widehat{N}_{WL}^{12} \quad (8)$$

Dans le cas où $\Delta \widehat{N}_{WL}^{12} = \Delta N_{WL}^{12}$, on déduit de (4) que la première estimation $\hat{d}_{WL}^{12}$ est égale à la différence de marche $d^{12}$ aux erreurs différentielles de mesure $\Delta e_{WL}^{12}$ près :

$$\hat{d}_{WL}^{12} = d^{12} + \Delta e_{WL}^{12} \quad (9)$$

Dans un mode particulier de mise en oeuvre, le procédé de détermination 6 comporte une cinquième étape 65 et une sixième étape 66, dans lesquelles au moins une seconde estimation de la différence de marche est obtenue à partir des mesures $\Delta \tilde{\phi}_1^{12}$ et/ou $\Delta \tilde{\phi}_2^{12}$ de différences de phase linéaire, et de la première estimation $\hat{d}_{WL}^{12}$ de la différence de marche.

La première estimation $\hat{d}_{WL}^{12}$ n'est pas en pratique d'une précision suffisante pour obtenir une mesure précise de l'angle de visée θ, mais elle est utilisée pour lever l'ambiguïté au niveau desdites différences de phase linéaire.

Au cours de la cinquième étape 65 et pour au moins une longueur d'onde $\lambda_n$, $1 \leq n \leq 2$, une valeur $\Delta \widehat{N}_n^{12}$ de

l'ambiguïté $\Delta N_n^{12}$ est tout d'abord obtenue en calculant l'expression suivante :

$$\Delta \widehat{N}_n^{12} = R\left(\frac{-\Delta\tilde{\phi}_n^{12} + \hat{d}_{WL}^{12}}{\lambda_n}\right) \quad (10)$$

On déduit de (2) et (9) que la valeur $\Delta \widehat{N}_n^{12}$ est égale à l'ambiguïté $\Delta N_n^{12}$ de la mesure $\Delta\tilde{\phi}_n^{12}$ de différence de phase linéaire si la condition suivante est satisfaite :

$$|A\Delta e_1^{12} - B\Delta e_2^{12} - \Delta e_n^{12}| < \lambda_n/2 \quad (11)$$

En considérant la longueur d'onde $\lambda_1$, l'expression (11) devient :

$$|(A-1)\Delta e_1^{12} - B\Delta e_2^{12}| = \left|\frac{Q\lambda_1}{P\lambda_2 - Q\lambda_1}\Delta e_1^{12} - \frac{Q\lambda_1}{P\lambda_2 - Q\lambda_1}\Delta e_2^{12}\right| < \lambda_1/2$$

En majorant les erreurs différentielles de mesure de phase linéaire $\Delta e_1^{12}$ et $\Delta e_2^{12}$ par les bornes supérieures $max|\Delta e_1^{12}|$ et $max|\Delta e_2^{12}|$, on déduit que la valeur $\Delta \widehat{N}_n^{12}$ est égale à $\Delta N_n^{12}$ si lesdites bornes supérieures et les signaux radioélectriques satisfont la condition suivante :

$$max|\Delta e_1^{12}| + max|\Delta e_2^{12}| < \frac{|P\lambda_2 - Q\lambda_1|}{2|Q|} \quad (12)$$

En considérant la longueur d'onde $\lambda_2$, la condition (12) devient :

$$max|\Delta e_1^{12}| + max|\Delta e_2^{12}| < \frac{|P\lambda_2 - Q\lambda_1|}{2|P|} \quad (13)$$

Les conditions (12) et (13) sont obtenues par des choix de caractéristiques essentielles du système de détermination 1.

Dans la sixième étape 66 du procédé de détermination 6, la valeur $\Delta \widehat{N}_n^{12}$ de l'ambiguïté $\Delta N_n^{12}$ est ensuite reportée dans l'expression (2) de la mesure $\Delta\tilde{\phi}_n^{12}$ de différence de phase linéaire pour obtenir une seconde estimation $\hat{d}_n^{12}$ de la différence de marche $d^{12}$ :

$$\hat{d}_n^{12} = \Delta\tilde{\phi}_n^{12} + \lambda_n\Delta\widehat{N}_n^{12}.$$

Dans le cas où $\Delta\widehat{N}_n^{12} = \Delta N_n^{12}$, on déduit de (2) que la seconde estimation $\hat{d}_n^{12}$ est égale à la différence de marche $d^{12}$ à l'erreur différentielle de mesure de phase linéaire $\Delta e_n^{12}$ près :

$$\hat{d}_n^{12} = d^{12} + \Delta e_n^{12}.$$

La seconde estimation $\hat{d}_n^{12}$ ainsi obtenue est en moyenne plus précise que la première estimation $\hat{d}_{WL}^{12}$ du fait que l'erreur différentielle de mesure $\Delta e_n^{12}$ est en moyenne inférieure à l'erreur $\Delta e_{WL}^{12}$.

Dans un mode voisin de mise en oeuvre de la cinquième étape 65 et de la sixième étape 66, des niveaux des erreurs différentielles de mesure sur les mesures $\Delta \bar{\phi}_n^{12}$ de différences de phase linéaire sont estimées pour les deux longueurs d'ondes, et une valeur $\Delta \widehat{N}_n^{12}$ et une seconde estimation $\hat{d}_n^{12}$ sont calculées uniquement pour la longueur d'onde pour laquelle le niveau estimé de l'erreur différentielle de mesure est le plus petit.

Dans un autre mode voisin de mise en oeuvre de la cinquième étape 65 et de la sixième étape 66, une valeur $\Delta \widehat{N}_n^{12}$ et une seconde estimation $\hat{d}_n^{12}$ sont obtenues pour chaque longueur d'onde des signaux radioélectriques.

Une troisième estimation $\overset{\wedge}{d}{}^{12}$ est par exemple calculée en moyennant lesdites deux estimations $\hat{d}_n^{12}$ ou en effectuant une estimation dite de moindres carrés, à partir d'au moins deux estimations de la différence de marche $d^{12}$ (parmi $\hat{d}_{WL}^{12}$, $\hat{d}_1^{12}$ et/ou $\hat{d}_2^{12}$) et d'une estimation des niveaux des erreurs différentielles de mesure de phase linéaire (respectivement $\Delta e_{WL}^{12}$, $\Delta e_1^{12}$ et/ou $\Delta e_2^{12}$).

Dans un mode préféré de mise en oeuvre, le procédé de détermination 6 comporte également une septième étape 67 dans laquelle un filtrage est effectué pour réduire le niveau du bruit différentiel de mesure, compris dans l'erreur différentielle de mesure.

Le filtrage est effectué sur des valeurs de la différence de marche $d^{12}$ estimées successivement pendant une fenêtre de temps non nulle à partir d'une succession de mesures de phases, et correspond par exemple à une moyenne desdites valeurs successives dans un cas statique où les variations de l'angle de visée θ sont négligeables pendant ladite fenêtre de temps, ou à un filtrage tenant compte d'un modèle de variation dudit angle de visée dans le cas contraire.

Dans une huitième étape 68 du procédé de détermination 6, une valeur de l'angle de visée θ est calculée.

Tel qu'illustré sur la figure 2, l'angle de visée θ est lié à la différence de marche $d^{12}$ des signaux radioélectriques entre les deux antennes par la relation $d^{12} = L^{12} \cos θ$.

La valeur de l'angle de visée θ est donc obtenue au cours de ladite huitième étape à partir d'une estimation de la différence de marche $d^{12}$ et de la relation précédente en appliquant des procédés connus.

Suivant le mode de mise en oeuvre dudit procédé, ladite huitième étape est exécutée soit après la quatrième étape 64 (à partir de $\hat{d}_{WL}^{12}$), soit après la sixième étape 66 (à partir de $\overset{\wedge}{d}{}^{12}$ ou $\hat{d}_n^{12}$), soit après la septième étape 67 (à partir d'une valeur filtrée).

Dans un mode particulier de mise en oeuvre, le procédé de détermination 6 est itératif, et des estimations $\Delta \hat{b}_n^{12}$ des biais différentiels de mesure de phase linéaire sont calculées au moins pour la partie qui dépend de l'angle de visée en utilisant la valeur dudit angle de visée obtenue à la huitième étape 68, au moins à partir des réponses de phase angulaire des antennes de réception préalablement établies par calibration.

Dans ce mode de mise en oeuvre, les étapes du procédé de détermination 6 sont à nouveau exécutées :

- soit depuis la seconde étape 62, auquel cas des estimations $\Delta \hat{b}_n^{12}$ des biais différentiels de mesure sont calculées pour les deux longueurs d'ondes, et les deux mesures $\Delta \bar{\phi}_n^{12}$ de différences de phase linéaire sont remplacées par des mesures de différences de phase linéaire après correction $\Delta \bar{\phi}_n^{12} - \Delta \hat{b}_n^{12}$,

- soit depuis la cinquième étape 65, auquel cas au moins une estimation $\Delta \hat{b}_n^{12}$ est calculée pour au moins une longueur d'onde et l'au moins une mesure $\Delta \bar{\phi}_n^{12}$ de différence de phase linéaire correspondante est remplacée par $\Delta \bar{\phi}_n^{12} - \Delta \hat{b}_n^{12}$.

En itérant le procédé de détermination 6, les valeurs de l'angle de visée θ sont de plus en plus précises, et le nombre d'itérations est choisi, par exemple par simulation, pour assurer une précision moyenne satisfaisante pour l'application envisagée.

Il est à noter que les étapes du procédé sont également applicables à partir de mesures $\Delta \bar{\varphi}_n^{12}$ de différences de phase angulaire $\Delta \varphi_n^{12} = 2\pi \Delta \phi_n^{12} / \lambda_n$

ou à partir d'autres mesures de différence de phase, proportionnelles aux mesures $\Delta\tilde{\phi}_n^{12}$ de différences de phase linéaire $\Delta\phi_n^{12}$, en introduisant les coefficients de proportionnalité dans les équations utilisées dans les différentes étapes du procédé de détermination 6. De manière plus générale, les étapes du procédé sont exécutées comme suit :

a) première étape 61 : détermination pour chaque longueur d'onde $\lambda_n$, n = 1 et 2, d'une mesure $\Delta\tilde{\psi}_n^{12}$ d'une différence de phase $\Delta\psi_n^{12}$ égale à $C_n\Delta\phi_n^{12}$, où $C_n$ est un facteur réel non nul qui dépend de l'implémentation choisie et ne modifie pas le résultat du procédé de détermination 6 (la mesure $\Delta\tilde{\psi}_n^{12}$ est égale à $C_n\Delta\tilde{\phi}_n^{12}$ ; par exemple si $C_n$ = 1, la mesure $\Delta\tilde{\psi}_n^{12}$ est égale à la mesure $\Delta\tilde{\phi}_n^{12}$ de différence de phase linéaire ; si $C_n = 2\pi/\lambda_n$, la mesure $\Delta\tilde{\psi}_n^{12}$ est égale à la mesure $\Delta\tilde{\varphi}_n^{12}$ de différence de phase angulaire) ;

b) seconde étape 62 : détermination d'une différence de phase virtuelle $\Delta\tilde{\psi}_{WL}^{12}$ par combinaison linéaire des mesures $\Delta\tilde{\psi}_n^{12}$ de différences de phase déterminées pour chaque longueur d'onde $\lambda_n$, s'exprimant sous la forme suivante :

$$\Delta\tilde{\psi}_{WL}^{12} = D\left(\frac{P}{C_1\lambda_1}\Delta\tilde{\psi}_1^{12} - \frac{Q}{C_2\lambda_2}\Delta\tilde{\psi}_2^{12}\right),$$

où D désigne un facteur réel non nul qui dépend de l'implémentation choisie et ne modifie pas le résultat du procédé de détermination 6 (par exemple $D = \lambda_{WL}^{12}$ dans le cas décrit précédemment pour les mesures $\Delta\tilde{\phi}_n^{12}$ de différences de phase linéaire ; $D = 2\pi$ dans le cas de mesures $\Delta\tilde{\varphi}_n^{12}$ de différences de phase angulaire) ;

c) troisième étape 63 : détermination une valeur $\Delta\hat{N}_{WL}^{12}$ de l'ambiguïté de la différence de phase virtuelle $\Delta\tilde{\psi}_{WL}^{12}$ en arrondissant $-\Delta\tilde{\psi}_{WL}^{12}/D$ au nombre entier le plus proche ;

d) quatrième étape 64 : détermination d'une première estimation $\hat{d}_{WL}^{12}$ s'exprimant sous la forme :

$$\hat{d}_{WL}^{12} = \frac{\lambda_{WL}^{12}}{D}\left(\Delta\tilde{\psi}_{WL}^{12} + D\Delta\hat{N}_{WL}^{12}\right) ;$$

e) cinquième étape 65: détermination d'au moins une estimation $\Delta\hat{N}_n^{12}$, n = 1 et/ou 2, s'exprimant sous la forme :

$$\Delta\hat{N}_n^{12} = R\left(\frac{-\Delta\tilde{\psi}_n^{12} + C_n\hat{d}_{WL}^{12}}{\lambda_n C_n}\right) ;$$

f) sixième étape 66: détermination d'au moins une seconde estimation $\hat{d}_n^{12}$, n = 1 et/ou 2, de la différence de marche $d^{12}$, s'exprimant sous la forme :

$$\hat{d}_n^{12} = \frac{\left(\Delta\tilde{\psi}_n^{12} + \lambda_n C_n\Delta\hat{N}_n^{12}\right)}{C_n}$$

g) septième étape 67 : le filtrage est comme précédemment effectué sur des valeurs de la différence de marche $d^{12}$ estimées successivement pendant une fenêtre de temps non nulle ;

h) huitième étape 68 : détermination comme décrit précédemment d'une valeur de l'angle de visée $\theta$ recherché.

Dans les modes de mise en oeuvre du procédé de détermination dans lesquels une correction de biais différentiels de mesure est effectuée, une estimation $\Delta\hat{\beta}_n^{12}$ d'un biais différentiel de mesure $\Delta\beta_n^{12} = C_n\Delta b_n^{12}$ sur la mesure $\Delta\bar{\psi}_n^{12}$ de différence de phase est calculée pour au moins une longueur d'onde $\lambda_n$, $n = 1$ et/ou 2, et les étapes dudit procédé sont appliquées en considérant au moins une mesure de différence de phase après correction $\Delta\bar{\psi}_n^{12} - \Delta\hat{\beta}_n^{12}$, $n = 1$ et/ou 2.

Dans le cas plus général d'une application du procédé de détermination 6 à un dispositif récepteur 3 comportant un nombre d'antennes de réception $N_R$ supérieur à deux et non alignées, ledit dispositif récepteur comporte $C_{N_R}^2 = N_R!/2!$ bases d'antennes $(R_m, R_l)$ de distances caractéristiques $L^{ml}$, $1 \le m < l \le N_R$. Dans ce cas, des différences de marche $d^{ml}$ sont estimées pour au moins deux bases d'antennes en appliquant les étapes correspondantes du procédé de détermination 6, éventuellement avec des paramètres $P$ et $Q$ différents pour chaque base d'antennes considérée.

Dans un premier mode de mise en oeuvre de la huitième étape 68 du procédé de détermination 6, une valeur d'un angle de visée est calculée pour chaque estimation de différence de marche $d^{ml}$, $1 \le m < l \le N_R$. De manière préférentielle, les angles d'azimut $\varphi$ et d'élévation $\theta$ de la ligne de visée sont ensuite déterminés à partir de toutes les valeurs des angles de visée, par des calculs géométriques connus.

Dans un second mode de mise en oeuvre de la huitième étape 68 dudit procédé de détermination, les angles d'azimut $\varphi$ et d'élévation $\theta$ sont calculés directement à partir des estimations des différences de marche $d^{ml}$, $1 \le m < l \le N_R$, en exploitant la relation :

$$\begin{pmatrix} d^{12} \\ \vdots \\ d^{ml} \end{pmatrix} = \mathrm{H} \begin{pmatrix} \sin\theta\cos\varphi \\ \sin\theta\sin\varphi \\ \cos\theta \end{pmatrix}$$

Dans cette expression, H est une matrice comportant au plus $C_{N_R}^2$ lignes et trois colonnes et dont les coefficients dépendent des distances $L^{ml}$, $1 \le m < l \le N_R$, et des positions dans le référentiel 5 des antennes de réception $R_m$, $1 \le m \le N_R$.

La matrice H pour l'exemple représenté sur la figure 1 est, compte tenu des positions des antennes de réception dans le référentiel 5, égale à :

$$\mathrm{H} = \begin{pmatrix} 0 & 0 & L^{12} \\ 0 & -L^{13} & 0 \\ 0 & -L^{13} & -L^{12} \end{pmatrix}$$

Dans le cas d'une application du procédé de détermination 6 dans un système de détermination 1 dans lequel le dispositif émetteur émet un nombre de longueurs d'ondes $N_L$ supérieur à deux, des longueurs d'ondes virtuelles $\lambda_{WL}^{nk}$ sont considérées pour au moins deux paires de longueurs d'ondes $(\lambda_n, \lambda_k)$. $1 \le n < k \le N_L$. Pour chaque paire d'antennes $(R_m, R_l)$ considérée, une estimation de la différence de marche $d^{ml}$ est obtenue pour chaque longueur d'onde virtuelle $\lambda_{WL}^{nk}$. Une estimation unique de la différence de marche $d^{ml}$ est déterminée par exemple à partir des estimations obtenues pour les différentes longueurs d'ondes virtuelles considérées, soit par moindres carrés, soit en moyennant lesdites estimations.

Le procédé de conception 7, représenté sur la figure 4, est mis en oeuvre pour déterminer des caractéristiques essentielles d'un système de détermination 1 d'angles de visée pour lequel les ambiguïtés sur les mesures de phases sont levées dans le cas d'une application du procédé de détermination 6 selon l'invention.

Le procédé de conception 7 est décrit dans un premier temps pour la conception d'un système de détermination 1 comportant deux longueurs d'ondes $\lambda_1$ et $\lambda_2$ et deux antennes de réception $R_1$ et $R_2$. Les caractéristiques essentielles dudit système sont les valeurs des longueurs d'ondes $\lambda_1$ et $\lambda_2$, de la distance caractéristique $L^{12}$ de la base d'antennes, et du couple $(P, Q)$ de nombres entiers non nuls qui sont utilisés dans le procédé de détermination 6.

Les caractéristiques essentielles sont donc classées dans trois groupes : longueurs d'ondes ($\lambda_1$ et $\lambda_2$), distances caractéristiques de bases d'antennes ($L^{12}$), et paramètres du procédé de détermination 6 ($P$ et $Q$).

Dans une première étape 71 dudit procédé de conception, les deux longueurs d'ondes $\lambda_1$ et $\lambda_2$ des signaux radioélectriques sont choisies.

Les deux fréquences correspondant aux deux longueurs d'ondes $\lambda_1$ et $\lambda_2$ sont par exemple choisies dans une bande de fréquences allouée qui peut être imposée par les régulations nationales et/ou internationales pour le type d'application ciblée. Les fréquences sont par exemple choisies dans la bande S, qui correspond à la gamme de fréquences allant de 2GHz à 4GHz, ou telles que l'une des longueurs d'ondes est égale à la longueur d'onde du GPS commercial.

Dans une seconde étape 72 du procédé de conception 7, la distance $L^{12}$ entre les deux antennes de réception du dispositif récepteur 3 est déterminée en tenant compte par exemple des contraintes opérationnelles et des dimensions du dispositif récepteur 3.

Dans une troisième étape 73 du procédé de conception, le couple de paramètres $(P,Q)$ est déterminé de sorte que les conditions suivantes sont satisfaites :

$$L^{12} < \frac{\lambda_1 \lambda_2}{2|P\lambda_2 - Q\lambda_1|}, \quad (14)$$

$$P\lambda_2 \neq Q\lambda_1.$$

En considérant les expressions (14) et (7), on voit que l'ambiguïté identifiée dans la description de la troisième étape 63 du procédé de détermination 6 est levée dans le cas où les erreurs différentielles de mesure de phase linéaire sont négligeables.

Dans un mode particulier de mise en oeuvre du procédé de conception 7, des estimations $max|\Delta\hat{e}_1^{12}|$ et $max|\Delta\hat{e}_2^{12}|$ des bornes supérieures $max|\Delta e_1^{12}|$ et $max|\Delta e_2^{12}|$ des valeurs absolues des erreurs différentielles de mesure de phase linéaire $\Delta e_1^{12}$ et $\Delta e_2^{12}$ sont déterminées par théorie, simulation ou expérimentation.

Les bornes supérieures estimées correspondent aux bornes supérieures des valeurs absolues des erreurs différentielles de mesure de phase linéaire $\Delta e_1^{12}$ et $\Delta e_2^{12}$ sur les mesures $\Delta\tilde{\phi}_n^{12}$ de différences de phase linéaire utilisées au niveau de la seconde étape 62 du procédé de détermination 6. Dans le cas où ledit procédé de détermination est itératif, seule la première exécution de la seconde étape 62 est considérée.

Les estimations $max|\Delta\hat{e}_1^{12}|$ et $max|\Delta\hat{e}_2^{12}|$ sont obtenues en majorant les valeurs absolues des biais différentiels de mesure de phase linéaire $\Delta b_1^{12}$ et $\Delta b_2^{12}$ et/ou des bruits différentiels de mesure de phase linéaire $\Delta\varepsilon_1^{12}$ et $\Delta\varepsilon_2^{12}$.

Dans le cas des biais différentiels de mesure $\Delta b_1^{12}$ et $\Delta b_2^{12}$, les estimations $max|\Delta\hat{e}_1^{12}|$ et $max|\Delta\hat{e}_2^{12}|$ sont calculées au moins à partir des réponses de phase angulaire des deux antennes de réception $R_1$ et $R_2$ du dispositif récepteur 3 qui sont préalablement établies, par exemple par calibration.

Les bruits différentiels de mesure $\Delta\varepsilon_1^{12}$ et $\Delta\varepsilon_2^{12}$ ne sont pas nécessairement bornés, et dans ce cas les estimations $max|\Delta\hat{e}_1^{12}|$ et $max|\Delta\hat{e}_2^{12}|$ sont par exemple choisies égales à des estimations des écarts types desdits bruits multipliées par des nombres entiers, lesdits nombres entiers étant tels que les estimations $max|\Delta\hat{e}_1^{12}|$ et $max|\Delta\hat{e}_2^{12}|$ majorent les bruits différentiels de mesure $\Delta\varepsilon_1^{12}$ et $\Delta\varepsilon_2^{12}$ dans une majorité des cas, par exemple dans 99% des cas.

Dans ce mode de mise en oeuvre, les paramètres $P$ et $Q$ sont déterminés de sorte que $P\lambda_2 \neq Q\lambda_1$ et que :

$$L^{12} < \frac{\lambda_1 \lambda_2}{|P\lambda_2 - Q\lambda_1|}\left(\frac{1}{2} - \frac{|P|}{\lambda_1}max|\Delta\hat{e}_1^{12}| - \frac{|Q|}{\lambda_2}max|\Delta\hat{e}_2^{12}|\right) \quad (15)$$

En considérant les expressions (15) et (6), on voit que l'ambiguïté identifiée pour la troisième étape 63 du procédé de détermination 6 est levée, dans le cas où les erreurs différentielles de mesure de phase linéaire ne sont pas négligeables.

En considérant une borne supérieure maximale $max|\Delta\hat{e}^{12}|$ égale à la plus grande des deux estimations $max|\Delta\hat{e}_1^{12}|$ et $max|\Delta\hat{e}_2^{12}|$, l'expression (15) devient :

$$L^{12} < \frac{\lambda_1\lambda_2}{2|P\lambda_2 - Q\lambda_1|} - \frac{(|P|\lambda_2 + |Q|\lambda_1)}{|P\lambda_2 - Q\lambda_1|} max|\Delta\hat{e}^{12}| \quad (16)$$

Des variantes du procédé de conception 7 consistent en une permutation des première 71, seconde 72 et troisième 73 étapes.

Ainsi, les caractéristiques essentielles correspondant à deux des groupes dans lesquels sont classées lesdites caractéristiques essentielles sont d'abord déterminées, puis les caractéristiques essentielles correspondant au dernier groupe (c'est-à-dire soit les longueurs d'ondes $\lambda_1$ et $\lambda_2$, soit la distance caractéristique de la base d'antennes $L^{12}$, soit le couple de nombres entiers non nuls $P$ et $Q$) sont déterminées de sorte que $P\lambda_2 \neq Q\lambda_1$ et que l'une au moins des trois conditions précédentes (14), (15) et (16) est satisfaite.

Dans un mode voisin de mise en oeuvre du procédé de conception 7, des caractéristiques essentielles correspondant à un groupe sont d'abord choisies (c'est-à-dire soit les longueurs d'ondes $\lambda_1$ et $\lambda_2$, soit la distance caractéristique de la base d'antennes $L^{12}$, soit le couple de nombres entiers non nuls $P$ et $Q$), puis les caractéristiques essentielles correspondant aux deux derniers groupes sont déterminées conjointement de sorte que $P\lambda_2 \neq Q\lambda_1$ et que l'une au moins des trois conditions précédentes (14), (15) et (16) est satisfaite.

Dans un mode préféré de mise en oeuvre du procédé de conception 7, les caractéristiques essentielles sont en outre choisies de sorte que l'une au moins des relations suivantes est vérifiée :

$$max|\Delta\hat{e}_1^{12}| + max|\Delta\hat{e}_2^{12}| < \frac{|P\lambda_2 - Q\lambda_1|}{2|Q|} \quad (17a)$$

$$max|\Delta\hat{e}_1^{12}| + max|\Delta\hat{e}_2^{12}| < \frac{|P\lambda_2 - Q\lambda_1|}{2|P|} \quad (17b)$$

Dans ce cas, en considérant les expressions (17a), (17b), (12) et (13), on voit que l'ambiguïté identifiée pour la cinquième étape 65 du procédé de détermination 6 est levée dans le cas où les erreurs de mesure de phase linéaire ne sont pas négligeables.

En considérant la borne supérieure maximale $max|\Delta\hat{e}^{12}|$, et en considérant le plus grand nombre entier $max(|P|,|Q|)$ du couple de nombres entiers non nuls $P$ et $Q$, les expressions (17a) et (17b) deviennent :

$$max|\Delta\hat{e}^{12}| < \frac{|P\lambda_2 - Q\lambda_1|}{4 \cdot max(|P|,|Q|)} \quad (18)$$

Dans le cas d'une conception d'un système de détermination 1 dans lequel le dispositif récepteur 3 comporte un nombre $N_R$ d'antennes de réception supérieur à deux, le procédé de conception 7 applique les conditions précédentes pour au moins deux paires d'antennes. Des estimations de bornes supérieures et/ou une borne supérieure maximale sont calculées pour chaque paire d'antennes considérée, et sont utilisées dans les conditions précédentes.

Dans le cas d'une conception d'un système de détermination 1 dans lequel le dispositif émetteur 4 émet un nombre $N_L$ de longueurs d'ondes supérieur à deux, le procédé de conception 7 applique les conditions précédentes pour au moins deux paires de longueurs d'ondes et pour chaque paire d'antennes considérée.

L'invention concerne également le dispositif récepteur 3, dans le cas où il applique le procédé de détermination 6.

Tel que décrit précédemment, le dispositif récepteur 3 comporte $N_R$ antennes de réception $R_1$ à $R_{N_R}$, $N_R$ étant supérieur ou égal à deux. Lesdites antennes de réception ont de préférence des attitudes sensiblement identiques et ont des caractéristiques semblables, de sorte que pour une ligne de visée donnée les réponses de phase angulaire desdites antennes de réception sont sensiblement identiques, de sorte qu'un biais différentiel maximum de phase

**EP 2 085 787 B1**

angulaire entre lesdites antennes est relativement petit, par exemple inférieur ou égal à 5°.

Le dispositif récepteur 3 comporte en outre des moyens pour la mesure des phases angulaires des signaux radioélectriques reçus sur les $N_R$ antennes de réception, et/ou pour déterminer des différences de phases angulaires entre les différentes paires d'antennes de réception, à partir desquelles les mesures $\Delta\bar{\psi}_n^{ml}$, $1 \leq m < l \leq N_R$, $1 \leq n \leq N_L$, sont déterminées. Les différences de phases angulaires des signaux radioélectriques sont par exemple mesurées directement au niveau des antennes de réception, ou au niveau des étages radioélectriques desdites antennes, ou encore déterminées en bande de base après conversion analogique numérique desdits signaux radioélectriques.

Le dispositif récepteur 3 comporte également des moyens pour le calcul des différentes étapes du procédé de détermination 6, par exemple des composants électroniques tels que des processeurs et des mémoires reliés par des bus de données.

Dans le cas d'un système de détermination 1 où un dispositif est à la fois émetteur et récepteur, ledit dispositif comporte $N_R$ antennes de réception et au moins une antenne apte à émettre qui est, dans un mode économique de réalisation, confondue avec une des antennes de réception.

L'invention concerne également le système de détermination 1 d'angles de visée comportant le dispositif récepteur 3 et au moins un dispositif émetteur 4 émettant les signaux radioélectriques comportant les $N_L$ longueurs d'ondes différentes $\lambda_n$, $1 \leq n \leq N_L$.

Dans un mode particulier de réalisation, les $N_L$ longueurs d'ondes différentes $\lambda_n$, $1 \leq n \leq N_L$ sont compatibles avec des signaux radioélectriques émis par un système global de navigation par satellites tel que le système GPS. Par compatible, on entend que les signaux radioélectriques émis par le dispositif émetteur ne créent pas d'interférences sur les signaux radioélectriques du système global de navigation par satellites, ou sont assimilables auxdits signaux radioélectriques du système global de navigation par satellites.

Dans un autre mode particulier de réalisation, le dispositif émetteur comporte un pseudolite.

Dans un mode de réalisation du système de détermination 1, ledit système de détermination comporte au moins deux dispositifs émetteurs dont les angles de visée par rapport au dispositif récepteur 3 sont sensiblement différents, c'est-à-dire espacés d'au moins une dizaine de degrés, et des positions relatives dudit dispositif récepteur par rapport auxdits au moins deux dispositifs émetteurs sont connues a priori dans un référentiel de référence, tel que le référentiel 5 ou un référentiel terrestre. Le système de détermination 1 est ainsi apte à déterminer, à partir desdites positions relatives et d'estimations des angles de visée obtenues en appliquant le procédé de détermination 6, une orientation d'au moins une base d'antennes de réception dudit dispositif récepteur 3 dans ledit référentiel de référence. Cette détermination met en oeuvre des procédés connus.

De préférence, les au moins deux dispositifs émetteurs 4 sont embarqués dans des satellites d'un système global de navigation par satellites, et le dispositif récepteur 3 est embarqué dans un véhicule comportant au moins un récepteur du système global de navigation par satellites.

Les positions relatives du dispositif récepteur 3 par rapport aux au moins deux dispositifs émetteurs sont dans ce cas obtenues de préférence de l'au moins un récepteur du système global de navigation par satellites.

Dans un mode voisin de réalisation du système de détermination 1 dans lequel le dispositif récepteur 3 comporte au moins trois antennes de réception non alignées, les lignes de visée des au moins deux dispositifs émetteurs sont déterminées en appliquant le procédé de détermination 6 selon l'invention, autorisant ainsi la détermination de l'attitude dudit dispositif récepteur par rapport au référentiel de référence.

L'invention permet donc de concevoir un système de détermination d'angles de visée pour lequel un angle de visée est déterminé en utilisant une configuration particulièrement peu coûteuse comportant deux antennes de réception et deux longueurs d'ondes. Le procédé de détermination appliqué est basé sur des mesures de phases sur lesquelles une ambiguïté est levée en outre en dimensionnant de manière appropriée ledit système de détermination.

**Revendications**

**1.** Procédé (6) pour déterminer au moins un angle de visée (θ) entre un dispositif récepteur (3) comportant au moins deux antennes de réception ($R_1$,$R_2$); et au moins un dispositif émetteur (4) comportant au moins une antenne d'émission de signaux radioélectriques sur au moins deux longueurs d'ondes différentes $\lambda_1$ et $\lambda_2$ aptes à être reçues par les au moins deux antennes de réception dudit dispositif récepteur, dans lequel au moins une différence de marche des signaux radioélectriques entre deux antennes de réception ($R_1$,$R_2$) d'une base d'antennes est estimée pour déterminer ledit au moins un angle de visée, ledit procédé comportant une étape de détermination pour chaque longueur d'onde $\lambda_p$ considérée, $p$ = 1 et 2, d'une mesure $\Delta\bar{\psi}_p^{12}$ de différence de phase $C_p\Delta\phi_p^{12}$ entre les deux

**18**

antennes de réception ($R_1$,$R_2$), où $C_p$ désigne un nombre réel non nul et $\Delta\phi_p^{12}$ désigne une différence de phase linéaire, homogène à une distance, ledit procédé étant **caractérisé en ce qu'**il comporte les étapes de :

- détermination d'une différence de phase virtuelle $\Delta\tilde{\psi}_{WL}^{12}$ entre les deux antennes de réception ($R_1$,$R_2$) par combinaison linéaire des mesures $\Delta\tilde{\psi}_p^{12}$ de différences de phase déterminées pour chaque longueur d'onde $\lambda_p$, s'exprimant sous la forme :

$$\Delta\tilde{\psi}_{WL}^{12} = D\left(\frac{P}{C_1\lambda_1}\Delta\tilde{\psi}_1^{12} - \frac{Q}{C_2\lambda_2}\Delta\tilde{\psi}_2^{12}\right),$$

où D désigne un nombre réel non nul, P et Q sont des nombres entiers non nuls tels que $P\lambda_2 \neq Q\lambda_1$,

- détermination d'une valeur $\Delta\widehat{N}_{WL}^{12}$ entière d'une ambiguïté de la différence de phase virtuelle $\Delta\tilde{\psi}_{WL}^{12}$, égale à :

$$\Delta\widehat{N}_{WL}^{12} = R\left(-\Delta\tilde{\psi}_{WL}^{12}/D\right)$$

où $R(x)$ désigne le nombre entier le plus proche de $x$,

- détermination d'une première estimation $\hat{d}_{WL}^{12}$ de l'au moins une différence de marche, égale à :

$$\hat{d}_{WL}^{12} = \frac{\lambda_{WL}^{12}}{D}\left(\Delta\tilde{\psi}_{WL}^{12} + D\Delta\widehat{N}_{WL}^{12}\right),$$

où $\lambda_{WL}^{12}$ est une longueur d'onde virtuelle égale à $\lambda_1\lambda_2/(P\lambda_2 - Q\lambda_1)$.

2. Procédé (6) selon la revendication 1 comportant les étapes de :

- détermination d'au moins une valeur $\Delta\widehat{N}_p^{12}$ entière d'une ambiguïté de la mesure $\Delta\tilde{\psi}_p^{12}$ de différence de phase d'une longueur d'onde $\lambda_p$, $p$ = 1 et/ou 2, égale à :

$$\Delta\widehat{N}_p^{12} = R\left(\frac{-\Delta\tilde{\psi}_p^{12} + C_p\hat{d}_{WL}^{12}}{\lambda_p C_p}\right),$$

- détermination d'au moins une seconde estimation $\hat{d}_p^{12}$, $p$ = 1 et/ou 2, de l'au moins une différence de marche, égale à :

$$\hat{d}_p^{12} = \frac{\left(\Delta\tilde{\psi}_p^{12} + \lambda_p C_p\Delta\widehat{N}_p^{12}\right)}{C_p}.$$

3. Procédé (6) selon la revendication 1 ou 2, dans lequel une estimation $\Delta\hat{\beta}_p^{12}$ d'un biais différentiel de mesure $\Delta\beta_p^{12}$ sur la mesure $\Delta\tilde{\psi}_p^{12}$ de différence de phase, égal à $C_p\Delta b_p^{12}$ où $\Delta b_p^{12}$ désigne un biais différentiel de mesure de phase linéaire, est préalablement établie par théorie ou simulation ou expérimentation pour au moins une longueur d'onde $\lambda_p$, $p = 1$ et/ou 2, et les étapes dudit procédé sont appliquées en considérant au moins une mesure de différence de phase après correction $\Delta\tilde{\psi}_p^{12} - \Delta\hat{\beta}_p^{12}$, $p = 1$ et/ou 2.

4. Procédé (6) selon la revendication 1 ou 2, dans lequel une estimation $\Delta\hat{\beta}_p^{12}$ d'un biais différentiel de mesure $\Delta\beta_p^{12}$ sur la mesure $\Delta\tilde{\psi}_p^{12}$ de différence de phase, égal à $C_p\Delta b_p^{12}$ où $\Delta b_p^{12}$ désigne un biais différentiel de mesure de phase linéaire, est déterminée pour au moins une longueur d'onde $\lambda_p$, $p = 1$ et/ou 2, au moins à partir de réponses de phase angulaire des deux antennes de réception ($R_1$,$R_2$) préalablement déterminées par théorie ou simulation ou expérimentation, et d'au moins une valeur d'un angle de visée déterminée à partir d'une estimation de l'au moins une différence de marche des signaux radioélectriques entre les deux antennes de réception ($R_1$, $R_2$), et les étapes dudit procédé sont à nouveau appliquées en considérant au moins une mesur de différence de phase après correction

$$\Delta\tilde{\psi}_p^{12} - \Delta\hat{\beta}_p^{12},$$

$p$=1 et/ou 2.

5. Procédé (6) selon la revendication 4, **caractérisé en ce que** ledit procédé est itéré au moins deux fois, au moins une estimation $\Delta\hat{\beta}_p^{12}$, $p = 1$ et/ou 2, étant calculée pour chaque itération dudit procédé et les étapes dudit procédé étant appliquées pour chaque itération dudit procédé en considérant au moins une mesure de différence de phase après correction

$$\Delta\tilde{\psi}_p^{12} - \Delta\hat{\beta}_p^{12}, \; p = 1 \text{ et/ou } 2.$$

6. Procédé (6) selon l'une des revendications précédentes, dans lequel les nombres entiers non nuls $P$ et $Q$ sont choisis de sorte que le nombre rationnel $P/Q$ soit proche du rapport des longueurs d'ondes $\lambda_1/\lambda_2$.

7. Procédé (7) pour déterminer les caractéristiques essentielles d'un système de détermination (1) d'au moins un angle de visée ($\theta$) par un procédé conforme à l'une des revendications 1 à 6, ledit procédé étant **caractérisé en ce que** lesdites caractéristiques essentielles sont au moins :

   - une valeur d'une distance $L^{12}$ entre les deux antennes de réception ($R_1$,$R_2$) de la base d'antennes considérée pour estimer l'au moins une différence de marche,
   - des valeurs des deux longueurs d'ondes $\lambda_1$, $\lambda_2$,
   - des valeurs du couple d'entiers $P$ et $Q$ non nuls,

   dans lequel dit procédé les caractéristiques essentielles sont déterminées de sorte qu'au moins une des conditions suivantes est satisfaite :

$$L^{12} < \frac{\lambda_1\lambda_2}{2|P\lambda_2 - Q\lambda_1|},$$

$$L^{12} < \frac{\lambda_1\lambda_2}{|P\lambda_2 - Q\lambda_1|}\left(\frac{1}{2} - \frac{|P|}{\lambda_1}max|\Delta\hat{e}_1^{12}| - \frac{|Q|}{\lambda_2}max|\Delta\hat{e}_2^{12}|\right),$$

$$L^{12} < \frac{\lambda_1 \lambda_2}{2|P\lambda_2 - Q\lambda_1|} - \frac{(|P|\lambda_2 + |Q|\lambda_1)}{|P\lambda_2 - Q\lambda_1|} max|\Delta\hat{e}^{12}|,$$

expressions dans lesquelles $max|\Delta\hat{e}_1^{12}|$ et $max|\Delta\hat{e}_2^{12}|$ représentent des estimations de bornes supérieures d'erreurs différentielles de mesure de phase linéaire entre les deux antennes de réception $(R_1, R_2)$ de la base d'antennes, qui sont déterminées par théorie ou simulation ou expérimentation, et $max|\Delta\hat{e}^{12}|$ est défini égal à la plus grande des deux estimations $max|\Delta\hat{e}_1^{12}|$ et $max|\Delta\hat{e}_2^{12}|$.

**8.** Procédé (7) selon la revendication 7, dans lequel les caractéristiques essentielles sont choisies de sorte qu'au moins une des conditions suivantes est satisfaite :

$$max|\Delta\hat{e}_1^{12}| + max|\Delta\hat{e}_2^{12}| < \frac{|P\lambda_2 - Q\lambda_1|}{2|P|},$$

$$max|\Delta\hat{e}_1^{12}| + max|\Delta\hat{e}_2^{12}| < \frac{|P\lambda_2 - Q\lambda_1|}{2|Q|},$$

$$max|\Delta\hat{e}^{12}| < \frac{|P\lambda_2 - Q\lambda_1|}{4 \cdot max(|P|, |Q|)}.$$

**9.** Dispositif récepteur (3) pour déterminer au moins un angle de visée (θ) par un procédé conforme à l'une des revendications 1 à 6, dans lequel au moins une des conditions suivantes est satisfaite pour la base d'antennes :

$$L^{12} < \frac{\lambda_1 \lambda_2}{2|P\lambda_2 - Q\lambda_1|},$$

$$L^{12} < \frac{\lambda_1 \lambda_2}{|P\lambda_2 - Q\lambda_1|}\left(\frac{1}{2} - \frac{|P|}{\lambda_1}max|\Delta\hat{e}_1^{12}| - \frac{|Q|}{\lambda_2}max|\Delta\hat{e}_2^{12}|\right),$$

$$L^{12} < \frac{\lambda_1 \lambda_2}{2|P\lambda_2 - Q\lambda_1|} - \frac{(|P|\lambda_2 + |Q|\lambda_1)}{|P\lambda_2 - Q\lambda_1|}max|\Delta\hat{e}^{12}|,$$

expressions dans lesquelles $L^{12}$ est une distance caractéristique de ladite base d'antennes, $max|\Delta\hat{e}_1^{12}|$ et $max|\Delta\hat{e}_2^{12}|$ représentent des estimations de bornes supérieures d'erreurs différentielles de mesure de phase linéaire entre lesdites deux antennes de réception de ladite base d'antennes, qui sont déterminées par théorie ou simulation ou expérimentation, et $max|\Delta\hat{e}^{12}|$ est défini égal à la plus grande des deux estimations $max|\Delta\hat{e}_1^{12}|$ et $max|\Delta\hat{e}_2^{12}|$.

**10.** Dispositif récepteur (3) selon la revendication 9, dans lequel au moins une des conditions suivantes est satisfaite :

$$max|\Delta\hat{e}_1^{12}| + max|\Delta\hat{e}_2^{12}| < \frac{|P\lambda_2 - Q\lambda_1|}{2|P|},$$

$$max|\Delta\hat{e}_1^{12}| + max|\Delta\hat{e}_2^{12}| < \frac{|P\lambda_2 - Q\lambda_1|}{2|Q|},$$

$$max|\Delta\hat{e}^{12}| < \frac{|P\lambda_2 - Q\lambda_1|}{4 \cdot max(|P|,|Q|)}.$$

**11.** Dispositif récepteur (3) selon la revendication 9 ou 10, comportant au moins trois antennes de réception non alignées, dans lequel des estimations de différences de marche sont calculées pour au moins deux bases d'antennes et les conditions décrites sont satisfaites pour lesdites au moins deux bases d'antennes.

**12.** Dispositif récepteur (3) selon la revendication 11, dans lequel un angle de visée ($\theta,\psi$) est déterminé pour chaque estimation de différence de marche, dans un plan de l'espace défini par la base d'antennes correspondante et le dispositif émetteur (4).

**13.** Système de détermination (1) d'au moins un angle de visée ($\theta$) comportant un dispositif récepteur (3) selon l'une des revendications 9 à 12, et comportant au moins un dispositif émetteur (4) comportant au moins une antenne d'émission de signaux radioélectriques sur au moins les deux longueurs d'ondes $\lambda_1$ et $\lambda_2$.

**14.** Système de détermination (1) selon la revendication 13 dans lequel les signaux radioélectriques émis par l'au moins un dispositif émetteur (4) sont compatibles avec des signaux radioélectriques émis par un système global de navigation par satellites.

**15.** Système de détermination (1) selon la revendication 14, dans lequel un dispositif émetteur (4) comporte un pseudolite.

**16.** Système de détermination (1) selon l'une des revendications 13 à 15, comportant au moins deux dispositifs émetteurs (4) dont les angles de visées par rapport au dispositif récepteur (3) sont sensiblement différents, des positions relatives dudit dispositif récepteur par rapport auxdits au moins deux dispositifs émetteurs étant connues a priori dans un référentiel de référence, ledit système de détermination étant apte à déterminer, à partir desdites positions relatives et d'estimations des angles de visée desdits au moins deux dispositifs émetteurs, une orientation de la base d'antennes de réception dudit dispositif récepteur (3) dans ledit référentiel de référence.

**17.** Système de détermination (1) selon la revendication 16, dans lequel les au moins deux dispositifs émetteurs (4) sont embarqués dans des satellites d'un système global de navigation par satellites et le dispositif récepteur (3) est embarqué dans un véhicule comportant au moins un récepteur du système global de navigation par satellites.

**18.** Système de détermination (1) selon la revendication 17, dans lequel lesdites positions relatives du dispositif récepteur (3) par rapport auxdits au moins deux dispositifs émetteurs sont obtenues de l'au moins un récepteur du système global de navigation par satellites.

**19.** Système de détermination (1) selon l'une des revendications 16 à 18, dans lequel le dispositif récepteur (3) comporte au moins trois antennes de réception non alignées, et la détermination des angles de visée desdits au moins deux dispositifs émetteurs (4) par rapport à au moins deux bases d'antennes non alignées dudit dispositif récepteur est utilisée pour déterminer l'attitude dudit dispositif récepteur par rapport audit référentiel de référence.

**Claims**

1. A method (6) for determining at least one viewing angle (θ) between a receiving device (3) comprising at least two receiving antennas ($R_1,R_2$), and at least one transmitting device (4) comprising at least one antenna for transmitting radioelectric signals over at least two different wavelengths $\lambda_1$ and $\lambda_2$ capable of being received by the at least two receiving antennas of said receiving device, wherein at least one difference in path length of the radioelectric signals between two receiving antennas ($R_1,R_2$) of a base of antennas is estimated to determine said at least one viewing angle, said method comprising a step involving determining for each wavelength $\lambda_p$ considered, $p$ = 1 and 2, a measurement $\Delta\tilde{\psi}_p^{12}$ of a phase difference $C_p\Delta\phi_p^{12}$ between the two receiving antennas ($R_1,R_2$), where $C_p$ denotes a non-zero real number and $\Delta\phi_p^{12}$ denotes a linear phase difference, dimensionally equivalent to a distance, said method being **characterised in that** it comprises the steps of:

   - determining a virtual phase difference $\Delta\tilde{\psi}_{WL}^{12}$ between the two receiving antennas ($R_1,R_2$) by linear combination of the phase difference measurements $\Delta\tilde{\psi}_p^{12}$ determined for each wavelength $\lambda_p$, expressed in the following form:

   $$\Delta\tilde{\psi}_{WL}^{12} = D\left(\frac{P}{C_1\lambda_1}\Delta\tilde{\psi}_1^{12} - \frac{Q}{C_2\lambda_2}\Delta\tilde{\psi}_2^{12}\right),$$

   where $D$ denotes a non-zero real number, $P$ and $Q$ are non-zero integers such as $P\lambda_2 \neq Q\lambda_1$,

   - determining an integer value $\Delta\bar{N}_{WL}^{12}$ of an ambiguity of the virtual phase difference $\Delta\tilde{\psi}_{WL}^{12}$, equal to:

   $$\Delta\bar{N}_{WL}^{12} = R\left(-\Delta\tilde{\psi}_{WL}^{12}/D\right)$$

   where $R(x)$ denotes the closest integer to $x$,

   - determining a first estimation $\hat{d}_{WL}^{12}$ of the at least one difference in path length, equal to:

   $$\hat{d}_{WL}^{12} = \frac{\lambda_{WL}^{12}}{D}\left(\Delta\tilde{\psi}_{WL}^{12} + D\Delta\bar{N}_{WL}^{12}\right),$$

   where $\lambda_{WL}^{12}$ is a virtual wavelength equal to $\lambda_1\lambda_2/(P\lambda_2 - Q\lambda_1)$.

2. A method (6) according to claim 1 comprising the steps of:

   - determining at least one integer value $\Delta\bar{N}_p^{12}$ of an ambiguity of the phase difference measurement $\Delta\tilde{\psi}_p^{12}$ of a wavelength $\lambda_p$, $p$ = 1 and/or 2, equal to:

   $$\Delta\bar{N}_p^{12} = R\left(\frac{-\Delta\tilde{\psi}_p^{12} + C_p\hat{d}_{WL}^{12}}{\lambda_p C_p}\right),$$

   - determining at least one second estimation $\hat{d}_p^{12}$, $p$ = 1 and/or 2, of the at least one difference in path length, equal to:

   $$\hat{d}_p^{12} = \frac{\left(\Delta\tilde{\psi}_p^{12} + \lambda_p C_p\Delta\bar{N}_p^{12}\right)}{C_p}.$$

3. A method (6) according to claim 1 or 2 wherein an estimation $\Delta\hat{\beta}_p^{12}$ of a differential measurement bias $\Delta\beta_p^{12}$ in the phase difference measurement $\Delta\tilde{\psi}_p^{12}$, equal to $C_p\Delta b_p^{12}$ where $\Delta b_p^{12}$ denotes a linear phase differential measurement bias, is previously established by theory, simulation or experimentation for at least one wavelength $\lambda_p$, $p$ = 1 and/or 2, and the steps of said method are applied by considering at least one phase difference measurement after correction $\Delta\tilde{\psi}_p^{12} - \Delta\hat{\beta}_p^{12}$, $p$ = 1 and/or 2.

4. A method (6) according to claim 1 or 2 wherein an estimation $\Delta\hat{\beta}_p^{12}$ of a differential measurement bias $\Delta\beta_p^{12}$ in the phase difference measurement $\Delta\bar{\psi}_p^{12}$, equal to $C_p \Delta b_p^{12}$ where $\Delta b_p^{12}$ denotes a linear phase differential measurement bias, is determined for at least one wavelength $\lambda_p$, $p$ = 1 and/or 2, at least on the basis of angular phase responses of the two receiving antennas ($R_1,R_2$) previously determined by theory, simulation or experimentation, and of at least one value of a viewing angle determined on the basis of an estimation of the at least one difference in path length of the radioelectric signals between the two receiving antennas ($R_1,R_2$), and the steps of said method are again applied by considering at least one phase difference measurement after correction $\Delta\tilde{\psi}_p^{12} - \Delta\hat{\beta}_p^{12}$, $p$ = 1 and/or 2.

5. A method (6) according to claim 4, **characterised in that** said method is iterated at least twice, at least one estimation $\Delta\hat{\beta}_p^{12}$, $p$ = 1 and/or 2, being calculated for each iteration of said method and the steps of said method being applied for each iteration of said method by considering at least one phase difference measurement after correction $\Delta\tilde{\psi}_p^{12} - \Delta\hat{\beta}_p^{12}$, $p$ = 1 and/or 2.

6. A method (6) according to one of the previous claims, wherein the non-zero integers $P$ and $Q$ are chosen so that the rational number $P/Q$ is close to the ratio of the wavelengths $\lambda_1/\lambda_2$.

7. A method (7) for determining the essential characteristics of a determination system (1) for determining at least one viewing angle ($\theta$) by a method compliant with one of claims 1 to 6, said method being **characterised in that** said essential characteristics are at least:

   - a value of a distance $L^{12}$ between the two receiving antennas ($R_1,R_2$) of the base of antennas considered to estimate the at least one difference in path length,
   - values of the two wavelengths $\lambda_1$, $\lambda_2$,
   - values of the pair of non-zero integers $P$ and $Q$,

   in which method, the essential characteristics are determined so that at least one of the following conditions is met:

$$L^{12} < \frac{\lambda_1 \lambda_2}{2|P\lambda_2 - Q\lambda_1|},$$

$$L^{12} < \frac{\lambda_1 \lambda_2}{|P\lambda_2 - Q\lambda_1|}\left(\frac{1}{2} - \frac{|P|}{\lambda_1}max|\Delta\hat{e}_1^{12}| - \frac{|Q|}{\lambda_2}max|\Delta\hat{e}_2^{12}|\right),$$

$$L^{12} < \frac{\lambda_1 \lambda_2}{2|P\lambda_2 - Q\lambda_1|} - \frac{(|P|\lambda_2 + |Q|\lambda_1)}{|P\lambda_2 - Q\lambda_1|}max|\Delta\hat{e}^{12}|,$$

expressions in which $max|\Delta\hat{e}_1^{12}|$ and $max|\Delta\hat{e}_2^{12}|$ represent estimations of the upper bounds of differential errors of linear phase measurement between the two receiving antennas ($R_1,R_2$) of the base of antennas, which are determined by theory, simulation or experimentation, and $max|\Delta\hat{e}^{12}|$ is defined as equal to the largest of the two estimations $max|\Delta\hat{e}_1^{12}|$ and $max|\Delta\hat{e}_2^{12}|$.

8. A method (7) according to claim 7, wherein the essential characteristics are chosen so that at least one of the following conditions is met:

$$max|\Delta\hat{e}_1^{12}| + max|\Delta\hat{e}_2^{12}| < \frac{|P\lambda_2 - Q\lambda_1|}{2|P|},$$

$$max|\Delta\hat{e}_1^{12}| + max|\Delta\hat{e}_2^{12}| < \frac{|P\lambda_2 - Q\lambda_1|}{2|Q|},$$

$$max|\Delta\hat{e}^{12}| < \frac{|P\lambda_2 - Q\lambda_1|}{4 \cdot max(|P|,|Q|)}.$$

9.  A receiving device (3) for determining at least one viewing angle (θ) via a method compliant with one of claims 1 to 6, wherein at least one of the following conditions is met for the base of antennas:

$$L^{12} < \frac{\lambda_1\lambda_2}{2|P\lambda_2 - Q\lambda_1|},$$

$$L^{12} < \frac{\lambda_1\lambda_2}{|P\lambda_2 - Q\lambda_1|}\left(\frac{1}{2} - \frac{|P|}{\lambda_1}max|\Delta\hat{e}_1^{12}| - \frac{|Q|}{\lambda_2}max|\Delta\hat{e}_2^{12}|\right),$$

$$L^{12} < \frac{\lambda_1\lambda_2}{2|P\lambda_2 - Q\lambda_1|} - \frac{(|P|\lambda_2 + |Q|\lambda_1)}{|P\lambda_2 - Q\lambda_1|}max|\Delta\hat{e}^{12}|,$$

expressions in which $L^{12}$ is a characteristic distance of said base of antennas, $max|\Delta\hat{e}_1^{12}|$ and $max|\Delta\hat{e}_2^{12}|$ represent estimations of the upper bounds of differential errors of linear phase measurement between said two receiving antennas of said base of antennas, which are determined by theory, simulation or experimentation, and $max|\Delta\hat{e}^{12}|$ is defined as equal to the largest of the two estimations $max|\Delta\hat{e}_1^{12}|$ and $max|\Delta\hat{e}_2^{12}|$.

10. A receiving device (3) according to claim 9 wherein at least one of the following conditions is met:

$$max|\Delta\hat{e}_1^{12}| + max|\Delta\hat{e}_2^{12}| < \frac{|P\lambda_2 - Q\lambda_1|}{2|P|},$$

$$max|\Delta\hat{e}_1^{12}| + max|\Delta\hat{e}_2^{12}| < \frac{|P\lambda_2 - Q\lambda_1|}{2|Q|},$$

$$max|\Delta\hat{e}^{12}| < \frac{|P\lambda_2 - Q\lambda_1|}{4 \cdot max(|P|,|Q|)}.$$

11. A receiving device (3) according to claim 9 or 10, comprising at least three non-aligned receiving antennas, in which estimations of differences in path length are calculated for at least two antenna bases and the conditions described are satisfied for said at least two antenna bases.

12. A receiving device (3) according to claim 11, wherein a viewing angle (θ,ψ) is determined for each estimation of difference in path length, in a plane in the space defined by the corresponding base of antennas and the transmitting device (4).

13. A determination system (1) for determining at least one viewing angle (θ) comprising a receiving device (3) according to one of claims 9 to 12, and comprising at least one transmitting device (4) comprising at least one antenna for transmitting radioelectric signals over at least the two wavelengths $\lambda_1$ and $\lambda_2$.

14. A determination system (1) according to claim 13 wherein the radioelectric signals transmitted by the at least one transmitting device (4) are compatible with the radioelectric signals transmitted by a global navigation satellite system.

**15.** A determination system (1) according to claim 14 wherein a transmitting device (4) comprises a pseudolite.

**16.** A determination system (1) according to one of claims 13 to 15, comprising at least two transmitting devices (4), the viewing angles of which, with respect to the receiving device (3), are substantially different, the relative positions of said receiving device with respect to said at least two transmitting devices being known a priori in a reference frame, said determination system being capable of determining, on the basis of said relative positions and estimations of the viewing angles of said at least two transmitting devices, an orientation of the base of receiving antennas of said receiving device (3) in said reference frame.

**17.** A determination system (1) according to claim 16 wherein the at least two transmitting devices (4) are on-board satellites of a global navigation satellite system and the receiving device (3) is on-board a vehicle comprising at least one receiver of the global navigation satellite system.

**18.** A determination system (1) according to claim 17 wherein said relative positions of the receiving device (3) with respect to said at least two transmitting devices are obtained from the at least one receiver of the global navigation satellite system.

**19.** A determination system (1) according to one of claims 16 to 18, wherein the receiving device (3) comprises at least three non-aligned receiving antennas, and the determination of the viewing angles of said at least two transmitting devices (4) with respect to at least two non-aligned antenna bases of said receiving device is used to determine the attitude of said receiving device with respect to said reference frame.

**Patentansprüche**

**1.** Verfahren (6) zur Bestimmung zumindest eines Zielwinkels ($\theta$) zwischen einer Empfangsvorrichtung (3) umfassend zumindest zwei Empfangsantennen ($R_1,R_2$) und zumindest einer Sendervorrichtung (4) umfassend zumindest eine Antenne zum Aussenden von Funksignalen in zumindest zwei verschiedenen Wellenlängen $\lambda_1$ und $\lambda_2$, die von den zumindest zwei Empfangsantennen der besagten Empfangsvorrichtung empfangen werden können, bei dem zumindest ein Wegunterschied bei den Funksignalen zwischen zwei Empfangsantennen ($R_1,R_2$) einer Antennenbasis geschätzt wird, um den besagten zumindest einen Zielwinkel zu bestimmen, wobei das besagte Verfahren einen Schritt zur Bestimmung eines Maßes $\Delta\bar{\psi}_p^{12}$ für die Phasenabweichung $C_p\Delta\phi_p^{12}$ zwischen den beiden Antennen ($R_1, R_2$) für jede angenommene Wellenlänge $\lambda_p$, $p = 1$ und 2, umfasst, wobei $C_p$ eine Realzahl ungleich Null bezeichnet, und $\Delta\phi_p^{12}$ eine lineare, und auf eine Entfernung gleichförmige Phasenabweichung bezeichnet, und das besagte Verfahren **dadurch gekennzeichnet ist, dass** es die folgenden Schritte umfasst:

- Bestimmung einer virtuellen Phasenabweichung $\Delta\tilde{\psi}_{WL}^{12}$ zwischen den beiden Empfangsantennen ($R_1,R_2$) durch eine Linearkombination der Messwerte $\Delta\bar{\psi}_p^{12}$ der erhobenen Phasenabweichung für jede Wellenlänge $\lambda_p$, die in der folgenden Form dargestellt wird:

$$\Delta\tilde{\psi}_{WL}^{12} = D\left(\frac{P}{C_1\lambda_1}\Delta\bar{\psi}_1^{12} - \frac{Q}{C_2\lambda_2}\Delta\tilde{\psi}_2^{12}\right),$$

wobei D eine Realzahl ungleich Null bezeichnet, und $P$ und $Q$ ganze Zahlen ungleich Null, wie $P\lambda_2 \neq Q\lambda_1$ sind,

- Bestimmung eines Gesamtwertes $\Delta\tilde{N}_{WL}^{12}$ mit einer Zweideutigkeit der virtuellen Phasenabweichung $\Delta\bar{\psi}_{WL}^{12}$, gleich:

$$\Delta\tilde{N}_{WL}^{12} = R\left(-\Delta\tilde{\psi}_{WL}^{12}/D\right)$$

wobei $R(x)$ jene ganze Zahl gezeichnet, die x am nächsten liegt,

- Bestimmung eines ersten Schätzwertes $\hat{d}_{WL}^{12}$ des zumindest einen Wegunterschiedes, gleich:

$$\hat{d}_{WL}^{12} = \frac{\lambda_{WL}^{12}}{D}\left(\Delta\tilde{\psi}_{WL}^{12} + D\Delta\hat{N}_{WL}^{12}\right),$$

wobei $\lambda_{WL}^{12}$ eine virtuelle Wellenlänge gleich $\lambda_1/\lambda_2/(P\lambda_2 - Q\lambda_1)$ ist

**2.** Verfahren (6) nach Anspruch 1 umfassend die folgenden Schritte:

- Bestimmung zumindest eines Gesamtwertes $\Delta\hat{N}_p^{12}$ einer Zweideutigkeit des Messwerts $\Delta\tilde{\psi}_p^{12}$ der Phasenabweichung einer Wellenlänge $\lambda_p$, $p = 1$ und/oder 2, gleich:

$$\Delta\hat{N}_p^{12} = R\left(\frac{-\Delta\tilde{\psi}_p^{12} + C_p\hat{d}_{WL}^{12}}{\lambda_p C_p}\right),$$

- Bestimmung zumindest eines zweiten Schätzwertes $\hat{d}_p^{12}$, $p = 1$ und/oder 2, des zumindest einen Wegunterschiedes, gleich:

$$\hat{d}_p^{12} = \frac{\left(\Delta\tilde{\psi}_p^{12} + \lambda_p C_p\Delta\hat{N}_p^{12}\right)}{C_p}.$$

**3.** Verfahren (6) nach Anspruch 1 oder 2, bei dem vorab durch Theorie oder Simulierung oder Erprobung zumindest für eine Wellenlänge $\lambda_p$, $p = 1$ und/oder 2 ein Schätzwert $\Delta\hat{\beta}_p^{12}$ einer differentiellen Messverzerrung $\Delta\beta_p^{12}$ am Messwert $\Delta\tilde{\psi}_p^{12}$ der Phasenabweichung gleich $C_p\Delta b_p^{12}$ erstellt wird, wobei $\Delta b_p^{12}$ eine differentielle Messverzerrung der Linearphase bezeichnet, und die Schritte des besagten Verfahrens unter Annahme von zumindest einer Messung der Phasenabweichung nach Korrektur $\Delta\tilde{\psi}_p^{12} - \Delta\hat{\beta}_p^{12}$, $p = 1$ und/oder 2 angewandt werden.

**4.** Verfahren (6) nach Anspruch 1 oder 2, bei dem zumindest für eine Wellenlänge $\lambda_p$, $p = 1$ und/oder 2 ein Schätzwert $\Delta\hat{\beta}_p^{12}$ einer differentiellen Messverzerrung $\Delta\beta_p^{12}$ am Messwert $\Delta\tilde{\psi}_p^{12}$ der Phasenabweichung gleich $C_p\Delta b_p^{12}$ erstellt wird, wobei $\Delta b_p^{12}$ eine differentielle Messverzerrung der Linearphase bezeichnet, zumindest ausgehend von Winkelphasenrückmeldungen der beiden Empfangsantennen $(R_1, R_2)$, die zuvor durch Theorie oder Simulierung oder Erprobung bestimmt worden sind, und zumindest eines Wertes eines Zielwinkels, der durch einen Schätzwert von zumindest einem Wegunterschied der Funksignale zwischen den beiden Empfangsantennen $(R_1, R_2)$ bestimmt wird, und die Schritte des besagten Verfahrens unter Annahme von zumindest einer Phasenabweichungsmessung nach erfolgter Korrektur $\Delta\tilde{\psi}_p^{12} - \Delta\hat{\beta}_p^{12}$, $p = 1$ und/oder 2 erneut angewandt werden.

**5.** Verfahren (6) nach Anspruch 4, **dadurch gekennzeichnet, dass** das besagte Verfahren zumindest zweimal wiederholt wird, wobei zumindest ein Schätzwert $\Delta\hat{\beta}_p^{12}$, $p = 1$ und/oder 2 für jede Wiederholung des besagten Verfahrens berechnet wird, und die Schritte des besagten Verfahrens bei jeder Wiederholung des besagten Verfahrens unter Annahme von zumindest einer Phasenabweichungsmessung nach erfolgter Korrektur $\Delta\tilde{\psi}_p^{12} - \Delta\hat{\beta}_p^{12}$, $p = 1$ und/oder 2 angewandt werden.

**6.** Verfahren nach einem der vorherigen Ansprüche, bei dem die ganzen Zahlen ungleich Null P und Q so gewählt werden, dass die rationale Zahl P/Q nahe dem Verhältnis der Wellenlängen $\lambda_1/\lambda_2$ liegt.

**7.** Verfahren (7) zur Bestimmung der wesentlichen Merkmale eines Systems zur Bestimmung (1) von zumindest einem Zielwinkel ($\theta$) durch ein Verfahren nach einem der Ansprüche 1 bis 6, wobei das besagte Verfahren **dadurch gekennzeichnet ist, dass** die besagten wesentlichen Merkmale folgende sind:

- ein Abstandswert $L^{12}$ zwischen den beiden Empfangsantennen $(R_1, R_2)$ der angenommenen Antennenbasis zur Einschätzung von zumindest einem Wegunterschied,
- Werte der beiden Wellenlängen $\lambda_1$, $\lambda_2$,

- Werte des Ganzzahlenpaares ungleich Null P und Q,

wobei die wesentlichen Merkmale bei dem besagten Verfahren derart bestimmt werden, dass zumindest eine der folgenden Bedingungen erfüllt wird:

$$L^{12} < \frac{\lambda_1 \lambda_2}{2|P\lambda_2 - Q\lambda_1|},$$

$$L^{12} < \frac{\lambda_1 \lambda_2}{|P\lambda_2 - Q\lambda_1|} \left( \frac{1}{2} - \frac{|P|}{\lambda_1} max|\Delta\hat{e}_1^{12}| - \frac{|Q|}{\lambda_2} max|\Delta\hat{e}_2^{12}| \right),$$

$$L^{12} < \frac{\lambda_1 \lambda_2}{2|P\lambda_2 - Q\lambda_1|} - \frac{(|P|\lambda_2 + |Q|\lambda_1)}{|P\lambda_2 - Q\lambda_1|} max|\Delta\hat{e}^{12}|,$$

Formeln, bei denen $max|\Delta\hat{e}_1^{12}|$ und $max|\Delta\hat{e}_2^{12}|$ Schatzwerte für die oberen Grenzen der differentiellen Messfehler der Linearphase zwischen den beiden Empfangsantennen ($R_1, R_2$) der Antennenbasis darstellen, die durch Theorie oder Simulierung oder Erprobung bestimmt werden, und $max|\Delta\hat{e}^{12}|$ gleich dem größeren der beiden Schätzwerte $max|\Delta\hat{e}^{12}{}_1|$ und $max|\Delta\hat{e}^{12}{}_2|$ definiert wird.

8. Verfahren (7) nach Anspruch 7, bei dem die wesentlichen Merkmale derart ausgewählt werden, dass zumindest eine der folgenden Bedingungen erfüllt wird:

$$max|\Delta\hat{e}_1^{12}| + max|\Delta\hat{e}_2^{12}| < \frac{|P\lambda_2 - Q\lambda_1|}{2|P|},$$

$$max|\Delta\hat{e}_1^{12}| + max|\Delta\hat{e}_2^{12}| < \frac{|P\lambda_2 - Q\lambda_1|}{2|Q|},$$

$$max|\Delta\hat{e}^{12}| < \frac{|P\lambda_2 - Q\lambda_1|}{4 \cdot max(|P|, |Q|)}.$$

9. Empfangsvorrichtung (3) zur Bestimmung zumindest eines Zielwinkels (θ) durch ein Verfahren nach einem der Ansprüche 1 bis 6, bei dem zumindest eine der Bedingungen für die Antennenbasis erfüllt wird:

$$L^{12} < \frac{\lambda_1 \lambda_2}{2|P\lambda_2 - Q\lambda_1|},$$

$$L^{12} < \frac{\lambda_1 \lambda_2}{|P\lambda_2 - Q\lambda_1|} \left( \frac{1}{2} - \frac{|P|}{\lambda_1} max|\Delta\hat{e}_1^{12}| - \frac{|Q|}{\lambda_2} max|\Delta\hat{e}_2^{12}| \right),$$

$$L^{12} < \frac{\lambda_1 \lambda_2}{2|P\lambda_2 - Q\lambda_1|} - \frac{(|P|\lambda_2 + |Q|\lambda_1)}{|P\lambda_2 - Q\lambda_1|} max|\Delta\hat{e}^{12}|,$$

Formeln, bei denen $L^{12}$ ein charakteristischer Zustand der besagten Antennenbasis ist, $max|\Delta\hat{e}_1^{12}|$ und $max|\Delta\hat{e}_2^{12}|$ die Schätzwerte für die oberen Grenzen der differentiellen Messfehler der Linearphase zwischen den beiden besagten Empfangsantennen der besagten Antennenbasis darstellen, die durch Theorie oder Simulierung oder Erprobung bestimmt werden, und $max|\Delta\hat{e}^{12}|$ gleich dem größeren der beiden Schätzwerte $max|\Delta\hat{e}_1^{12}|$ und $max|\Delta\hat{e}_2^{12}|$

definiert wird.

10. Empfangsvorrichtung (3) nach Anspruch 9, bei der zumindest eine der folgenden Bedingungen erfüllt wird:

$$max|\Delta\hat{e}_1^{12}| + max|\Delta\hat{e}_2^{12}| < \frac{|P\lambda_2 - Q\lambda_1|}{2|P|},$$

$$max|\Delta\hat{e}_1^{12}| + max|\Delta\hat{e}_2^{12}| < \frac{|P\lambda_2 - Q\lambda_1|}{2|Q|},$$

$$max|\Delta\hat{e}^{12}| < \frac{|P\lambda_2 - Q\lambda_1|}{4 \cdot max(|P|, |Q|)}.$$

11. Empfangsvorrichtung (3) nach Anspruch 9 oder 10, umfassend zumindest drei nicht gefluchtete Empfangsantennen, bei der Schätzwerte des Wegunterschieds für zumindest zwei Antennenbasen berechnet werden, und die beschriebenen Bedingungen für die besagten zumindest zwei Antennenbasen erfüllt werden.

12. Empfangsvorrichtung (3) nach Anspruch 11, bei der für jeden Schätzwert des Wegunterschieds ein Zielwinkel ($\theta$, $\psi$) auf einer Ebene des Raumes bestimmt wird, der durch die entsprechende Antennenbasis und die Sendervorrichtung (4) definiert wird.

13. System zur Bestimmung zumindest eines Zielwinkels ($\theta$) zwischen einer Empfangsvorrichtung (3) nach einem der Ansprüche 9 bis 12, und umfassend zumindest eine Sendervorrichtung (4) umfassend zumindest eine Antenne zum Aussenden von Funksignalen in zumindest zwei verschiedenen Wellenlängen $\lambda_1$ und $\lambda_2$.

14. Bestimmungssystem (1) nach Anspruch 13, bei dem die Funksignale, die von zumindest einer Sendervorrichtung (4) ausgesandt werden, mit Funksignalen kompatibel sind, die von einem globalen Satellitennavigationssystem ausgesandt werden.

15. Bestimmungssystem (1) nach Anspruch 14, bei dem eine Sendervorrichtung (4) einen Pseudoliten umfasst.

16. Bestimmungssystem (1) nach einem der Ansprüche 13 bis 15, umfassend zumindest zwei Sendervorrichtungen (4), deren Zielwinkel in Bezug auf die Empfängervorrichtung (3) etwas unterschiedlich sind, wobei die relativen Positionen der besagte Empfängervorrichtung in Bezug auf die besagten zumindest zwei Sendervorrichtungen a priori innerhalb eines Referenzbezugssystems bekannt sind, und das besagte Bestimmungssystem in der Lage ist, ausgehend von den besagten relativen Positionen und Einschätzungen der Zielwinkel der besagten zumindest zwei Sendervorrichtungen, eine Ausrichtung der Empfangsantennenbasis der besagten Empfängervorrichtung (3) im besagten Referenzbezugssystem zu bestimmen.

17. Bestimmungssystem (1) nach Anspruch 16, bei dem die zumindest zwei Sendervorrichtungen (4) in Satelliten eines globalen Satellitennavigationssystems eingebaut sind, und die Empfängervorrichtung (3) in ein Fahrzeug eingebaut ist, das zumindest einen Empfänger des globalen Satellitennavigationssystems umfasst.

18. Bestimmungssystem (1) nach Anspruch 17, bei dem man die besagten relativen Positionen der Empfängervorrichtung (3) in Bezug auf die besagten zumindest zwei Sendervorrichtungen von zumindest einem Empfänger des globalen Satellitennavigationssystems erhält.

19. Bestimmungssystem (1) nach einem der Ansprüche 16 bis 18, bei dem die Empfängervorrichtung (3) zumindest drei nicht gefluchtete Empfangsantennen umfasst, und die Bestimmung der Zielwinkel der besagten zumindest zwei Sendervorrichtungen (4) in Bezug auf zumindest zwei nicht gefluchtete Antennenbasen der besagten Empfängervorrichtung zur Bestimmung des Verhaltens der besagten Empfängervorrichtung in Bezug auf das besagte Referenzbezugssystem verwendet wird.

**Fig. 1**

**Fig. 2**

**Fig. 3**

**Fig. 4**

**EP 2 085 787 B1**

## RÉFÉRENCES CITÉES DANS LA DESCRIPTION

**Documents brevets cités dans la description**

- WO 2007013069 A